# EUROPEAN PATENT APPLICATION

(11) **EP 2 056 560 A1**
(43) Date of publication of application: **06.05.2009**
(21) Application number: 07120011.7
(22) Date of filing: 05.11.2007
(51) Int. Cl.: H04L 29/06

(54) **Method and system for optimizing delivery of mobile content using differential metadata updates**

(71) Applicant: Research In Motion Limited, Waterloo, Ontario N2L 3W8 (CA)
(72) Inventor: Shenfield, Michael, Richmond Hill, Ontario L4C 3S9 (CA)
(74) Representative: Rickard, David John

(57) **Abstract**

A method of and system of optimizing content delivery within a content delivery channel at a processing element in a dynamic content delivery architecture, the content delivery channel having a plurality of logical or physical content types or a plurality of sub-channels, the method: receiving an envelope at the processing element, the envelope containing one or both of content and metadata; checking any received metadata to determine whether the received metadata comprises metadata for a subset of the plurality of logical or physical content types or plurality of sub-channels for the content delivery channel at the processing element; if the received metadata contains or refers to metadata for a subset of the plurality of logical or physical content types or plurality of sub-channels for the content delivery channel at the processing element, extracting the metadata; and applying the extracted metadata to any received content belonging to the subset of the plurality of logical or physical content types or a plurality of sub-channels for the content delivery channel at the processing element.

## Description

The present method and system relate generally to dynamic content delivery in a mobile environment, and in particular to a generic dynamic content delivery architecture in which applications and content providers can be added without changing the architecture.

Users of mobile devices or mobile user equipment (UE) are increasingly becoming more sophisticated in terms of the functionality that they require from their mobile devices and the way that they access data from the mobile devices.

Dynamic content delivery allows users to have information or data pushed to them, or to have a delivery client request information from a delivery server. Examples of data could include stock quotes, weather updates, traffic updates, dynamic wallpaper, ads, applications or other data desirable to a user.

Current push technologies for mobile devices such as wireless application protocol (WAP) have the ability to push content; however, WAP requires websites to be rewritten to satisfy the wireless application protocol and provide users with a uniform site that does not change to accommodate a user's capabilities to view a site.

Other alternatives include SMS based push and broadcast or cell broadcast. In the broadcast case, delivery cannot be customized to the needs of a particular user or the capabilities of a particular device. These systems therefore have no intelligence associated with them. A better solution is required for mobile devices.

### GENERAL

The present system and method preferably provide for a dynamic content delivery architecture and system that allows generic applications and content providers to be added to the system without the necessity to modify the architecture. Specifically, the present system and method may allow for a mobile device to become a dynamic application platform in which applications can be added and content provided to the mobile device, where the architecture of the dynamic content delivery system does not limit the type of application that can be installed on the device nor the type of content that the device receives.

In one aspect of the present application, metadata is preferably provided and associated with the content to add intelligence to the content for various processing elements within the dynamic content delivery architecture. This architecture may comprise logical components that provide for content provision, service provision including delivery servers, a wireless network, delivery clients and client applications. The metadata can be passed directly with the content or alternatively can be referred to, where the processing element can then retrieve the metadata. Either solution can be used with the embodiments herein.

In a further aspect of the present application, metadata is preferably provided in a layered "enveloped" model for sending content metadata. Content may be wrapped with metadata that can be used for processing at each element within a delivery framework. The metadata for each successive element is layered, thereby allowing the processing element to extract only the metadata for that element. For example, a content package that includes metadata directed to a delivery server, delivery client, and a client application can include the content with a first level of metadata for the client application, a second layer of metadata for the delivery client, and a third layer of metadata for delivery server. Thereby, when the envelope reaches the delivery server, the metadata for the delivery server may be extracted and applied to the content, and the modified content and metadata for the client application and for delivery client is passed to the delivery client, which is the next processing element.

In another aspect of the present application, the metadata can be split into static metadata (also referred to herein as channel metadata) and dynamic metadata (also referred to herein as content metadata). Static channel metadata may be established preferably at the time of registration of both the application and the content provider. However, the channel metadata can be established or updated at a later time. The channel metadata may specify parameters and processing rules that are specific to the delivery channel and types of content that is being delivered over this channel.

Dynamic metadata may conversely be associated with the specific content being passed.

In another aspect of the present application, a plug-in registration model is preferably presented within the delivery framework. A generic delivery client and a delivery server may be identified, each having various processing blocks or modules that allow these elements to process both content and metadata. These blocks can be directed to process the content being passed, the metadata being passed or both the content and the metadata being passed.

Plug-in registration further preferably provides for the passing of service manifests and application manifests to allow the establishment of a delivery channel between a content provider and an application. Specifically, service manifests can be used for registering a content provider with the delivery framework, and an application manifest can be used for registering an application with the delivery framework. Both, service manifest and application manifest may contain channel metadata for channels offered or channels of interest to the registering application.

In another aspect of the present application, a method for sending content, including but not limited to syndicated content, is preferably provided which allows for the handling of data based on its priority and based on network factors including the cost for sending data, the type of network connected to or the users' preferences. An optional mixed push/pull model for syndicated content may allow for either a delivery server to send content when network conditions become favorable or for a client to pull content when network conditions become favorable or when the user requires the content.

In a further aspect, differential metadata can be utilized in order to update only a portion of a metadata. In this aspect, a channel may convey more than one logical or physical content type or contains sub-channels, and one specific logical or physical content type or sub-channel can be updated independently of other logical or physical content types or sub-channels in the channel. As used herein the "logical content type" is a logical grouping of content items related to a particular topic (e.g. "stock quotes", "weather", etc.). The physical content type is differentiated by MIME type, file extensions, among others.

In a further aspect, metadata can be cached at each processing element. In one embodiment the metadata attributes and associated differential updates of content metadata are cached at a channel level, assuming a single content type for the channel or the same processing for all content types on that channel and all sub-channels of the channel. In a further embodiment, caching of metadata attributes and associated differential updates of content metadata may be done based on the content type in the channel. Thus each content type has metadata associated with it. This can further apply to sub-channels and further to static or channel metadata. Sub-channels, as described below, are logical content delivery constructs associated with a particular logical or physical content type or with a subscription filter. In other words, an update by the content type means that when content-item of the particular content type arrives, the metadata associated with the content-item updates the metadata used by the previous content-item of this type. And the update means that metadata parameters provided with this content item either overwrite or modify the same that are parameters cached. If parameters are not specified, the previous cached parameters are applied to processing of this content item.

In order to accommodate various mobile devices, a further aspect of the present application preferably provides for content fragmentation for content, including non-linear content fragmentation. Non-linear content fragmentation may comprise augmenting the content with metadata allowing the data to be recomposed once it has been passed to the client.

These and other aspects will be identified in more detail with respect to the drawings.

The present application therefore may provide a method of optimizing content delivery within a content delivery channel at a processing element in a dynamic content delivery architecture, the content delivery channel having a plurality of logical or physical content types or a plurality of sub-channels, the method comprising: receiving an envelope at the processing element, the envelope containing one or both of content and metadata; checking any received metadata to determine whether the received metadata comprises metadata for a subset of the plurality of logical or physical content types or plurality of sub-channels for the content delivery channel at said processing element; if said received metadata contains or refers to metadata for a subset of the plurality of logical or physical content types or plurality of sub-channels for the content delivery channel at said processing element, extracting said metadata; and applying said extracted metadata to any received content belonging to said subset of the plurality of logical or physical content types or a plurality of sub-channels for the content delivery channel at said processing element.

The present application may further provide a processing element in a dynamic content delivery architecture supporting delivery channels, the channels supporting a plurality of logical or physical content types or sub-channels associated therewith, said processing element comprising: a communication subsystem, said communication subsystem adapted to receive a content package from a content provider or a previous processing element in said dynamic content delivery architecture and further adapted to pass a modified content package to a subsequent processing element in said dynamic content delivery architecture; a metadata extractor adapted to extract metadata directed to the processing element from the content package; and a processor adapted to apply metadata based on content type or sub-channel to the content package once metadata for the processing element has been extracted.

The present application may still further provide a method of updating channel metadata for a channel having a plurality of logical or physical content types or sub-channels at a processing element in a dynamic content delivery architecture, the method comprising: receiving a channel metadata at the processing element; checking the channel metadata to determine whether the channel metadata comprises channel metadata for a subset of the plurality of logical or physical channel types or sub-channels at said processing element; and if said channel metadata contains channel metadata for said processing element, extracting and utilizing a the metadata based on the subset of the plurality of logical or physical content types or sub-channels.

### BRIEF DESCRIPTION OF THE DRAWINGS

The present application will be better understood with reference to the drawings, in which:
**Figure 1** is a block diagram of a basic architecture for a dynamic content delivery system;
**Figure 2** is a block diagram showing alternative architectures of the dynamic content delivery system of **Figure 1****;**
**Figure 3** is the block diagram of **Figure 1** showing content and metadata flow;
**Figure 4** is a block diagram showing a delivery server that can be used in association with the present system and method;
**Figure 5** is a block diagram showing a delivery client that can be used in association with the present system and method;
**Figure 6** is a block diagram showing a multilayer envelope model of content and metadata;
**Figure 7** is the block diagram of **Figure 6****,** showing processing steps dynamic metadata for each envelope;
**Figure 8** is the block diagram of **Figure 6****,** additionally showing processing using static and dynamic metadata;
**Figure 9** is a block diagram showing a registration process for an application to a single shared delivery client;
**Figure 10** is a block diagram showing a registration process of an application to a sending container managing a pool of delivery clients;
**Figure 11** is a block diagram showing an application registering to a content processor and socket listener;
**Figure 12** is a block diagram showing a content provider registering with a single shared delivery server;
**Figure 13** is a block diagram showing a content provider registering with a sending container managing a pool of delivery servers;
**Figure 14** is a flow diagram showing registration messages between a content provider and client application;
**Figure 15** is a block diagram showing interaction during registration between a delivery client and delivery server;
**Figure 16** is a block diagram of a content syndication model;
**Figure 17** is a block diagram of a linear fragmentation process;
**Figure 18** is a block diagram of a non-linear fragmentation process;
**Figure 19** is a block diagram of an exemplary mobile device that could be used in association with the present method and system;
**Figure 20** is a flow diagram showing the flow of content and metadata between a content provider and processing elements; and
**Figure 21** is a flow diagram showing the flow of channel metadata between processing elements.

### DESCRIPTION OF PREFERRED EMBODIMENTS

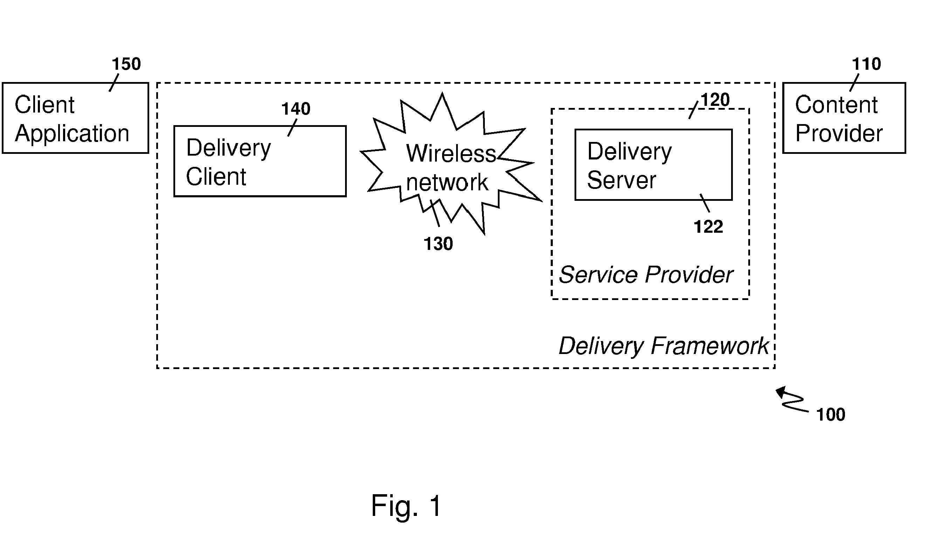

Reference is now made to **Figure 1****.** A generic sending system for delivering dynamic content to a client application is illustrated. A system of **Figure 1** is a simplified system and shows logical components that need to be in a dynamic content delivery architecture; however, one skilled in the art will appreciate that other components could exist or that various components could be grouped together.

The present disclosure encompasses concepts and messages that are associated with content delivered to a device, and this content is delivered either as a result of asynchronous push operations or as a response to a synchronous content request.
When a push or pull operation is described below, the other mode of delivery is applicable.

Architecture **100** includes a content provider **110.** Content provider **110** is arranged to provide dynamic content to users that are subscribed with content provider **110.** Examples can include, for example, a website selling books. A user may register with content provider **110** to obtain a list of newly released books within specified genres. Other examples could include news sites which might provide headlines to users on a periodic basis, traffic sites which might provide up-to-date traffic information to users during certain periods of the day, stock market sites which could provide updated stock quotes or currency exchange rates to users, among others.

As will be described in more detail below, content provider **110** registers with a service provider **120** in order to allow clients of the service provider to receive content from content provider **110.** Service provider **120** includes a delivery server **122** that acts as a proxy for a client or a client application and provides a destination for content provider **110** to send content.

Service provider **120** communicates over wireless network **130** with a delivery client **140** that is located on a mobile device. Delivery client **140** will be described in more detail below. Delivery client **140** receives the content that is being delivered from content provider **110** and can communicate the content with a client application **150,** which ultimately consumes the content.

Within the present specification, reference to content provider **110,** service provider **120,** delivery server **122,** wireless network **130,** delivery client **140** or client application **150** is a reference back to the architecture of **Figure 1****.**

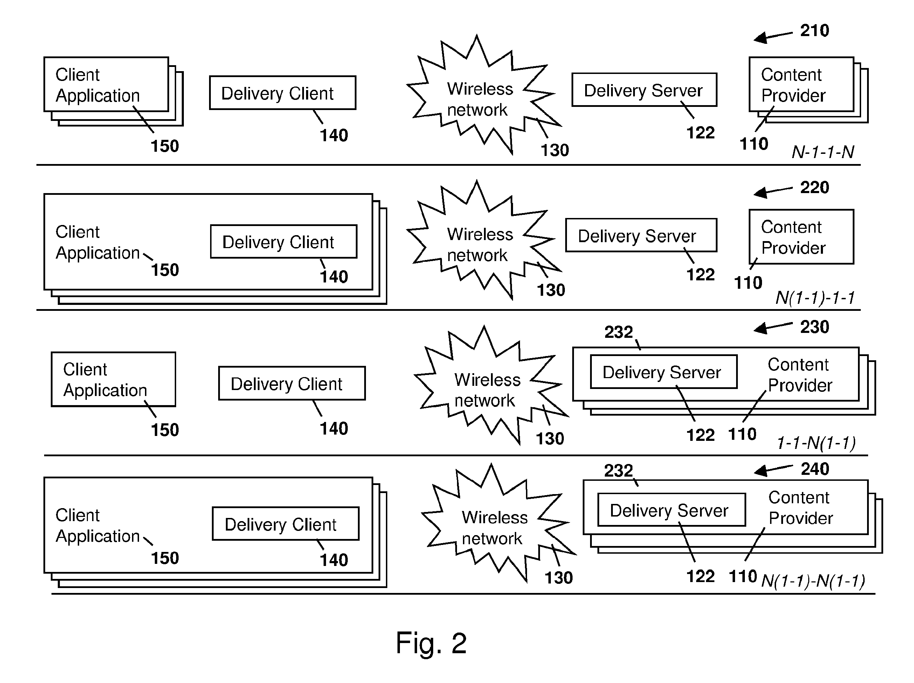

Referring to **Figure 2****,** it will be appreciated by those skilled in the art that the components of **Figure 1** are merely logical components and are not necessarily separate physical components. **Figure 1** illustrates a generic architecture in which one content provider **110,** one delivery server **122,** one delivery client **140** and one client application **150** exist. Alternatives are illustrated in **Figure 2****.**

Specifically, a first alternative architecture **210** includes multiple content providers **110** communicating with a delivery server **122.** Delivery server **122,** as in the architecture of **Figure 1****,** communicates over wireless network **130** with a delivery client **140.** Further, multiple client applications **150** exist in architecture **210.** This is therefore an N-1-1-N system having multiple content providers **110** and multiple client applications **150.**

Architecture **220** of **Figure 2** includes one content provider **110** communicating with and registered to delivery server **122.** Further, delivery server **122** communicates over wireless network **130** with multiple delivery clients **140.** Each delivery client **140** communicates with a client application **150.** Architecture **220** therefore groups the logical components of a client application 150 and a delivery client **140** and is an N(1-1)-1-1 system.

Architecture **230** of **Figure 2** has multiple push proxies **122,** each communicating with a content provider **110.** Each delivery server and content provider combination **232** communicates over wireless network **130** with a generic delivery client **140,** which in turn communicates with client application **150.** This is an 1-1-N(1-1) system.

In architecture **240** of **Figure 2****,** a content provider **110** and delivery server **122** grouping **232** communicates over wireless network **130** with a generic delivery client **140** and client application **150** combination. This is therefore an N(1-1)-N(1-1) system.

As will be appreciated by those skilled in the art, other alternatives are possible. The above shows various logical components, which can be in separate physical components or grouped together. For example, a delivery client can be imbedded in an application, common shared clients can be used by multiple applications or other alternatives.

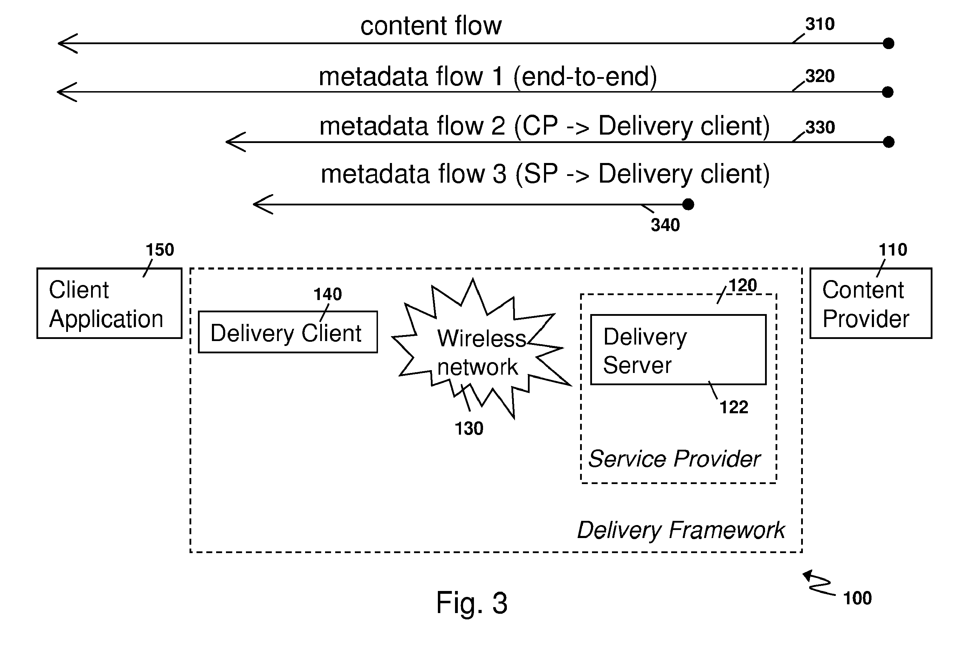

Reference is now made to **Figure 3****.** In order to add intelligence to a system, content is associated with a metadata. Metadata, in this case, is defined as data that can be used by a processing element to manipulate the content. As will be appreciated, a generic sending system requires metadata to allow various content providers and applications to exist within the system. The metadata can be in various forms, including processing parameters or rules, or a processing handler, code or reference provided directly or a link to a processing handler, code or rules in another location,

As can be seen in **Figure 3****,** content passes from content provider **110** to client application **150** and is illustrated by arrow **310.** Metadata, which provides instructions to various components within the architecture **100** can also pass between components within architecture **100,** usually along with the content. For example, arrow **320** illustrates metadata that originates at the content provider and is transparent to the delivery system until it reaches a client application **150.**

Arrow **330** shows metadata created by content provided **110** that is intended for the delivery client **140,** and thus only flows to generic delivery client **140.**

Arrow **340** illustrates metadata generated by service provider 120 and intended for the delivery client **140,** and thus is first associated with the content at the delivery server 122 and stripped from the content at generic delivery client **140.** Examples of where this could occur include agreements between a user and a service provider regarding a billing plan and the level of service to be provided, where the service provider can use the metadata to limit the services available or provide enhanced services.

The flow of metadata and the role of metadata is described in more detail below.

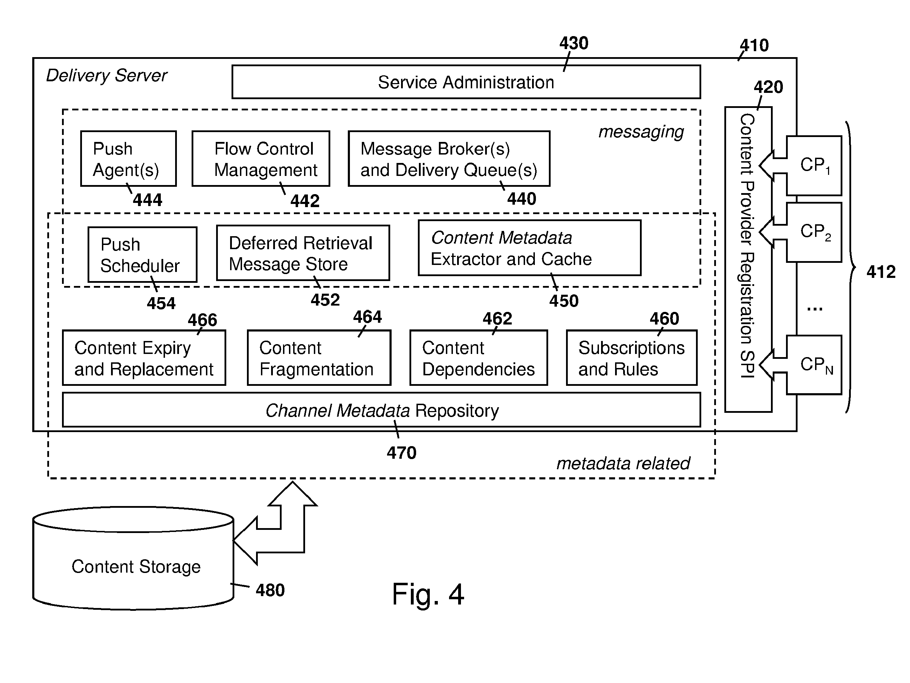

Reference is now made to **Figure 4. Figure 4** illustrates a detailed exemplary delivery server **410** which can be used in association with the present system and method. As will be appreciated by those skilled in the art, delivery server **410** could be the same as delivery server **122** from **Figures 1** and **2****.**

Delivery server **410** of **Figure 4** includes various elements that enable delivery server **410** to operate in a generic sending environment. This facilitates flexibility since the delivery server is not limited to interaction with specific content providers or delivery clients, but instead can be adapted to a dynamic environment. The elements described below for delivery server **410** are preferable have within delivery server **410,** but the elements are not exhaustive, and other elements are possible. Further, certain elements may be omitted from delivery server **410,** with the remaining elements still able to perform generic sending services.

Delivery server **410** includes content providers **412** registered to it. Content providers **412** register with a content provider registration service provider interface (SPI) **420.** As is described in more detail below, it is desirable in this registration that the content provider **412** includes certain information for the channel being established, referred to herein as channel metadata. Content providers **412** can be the same as content providers **110** of **Figure 1****.**

Delivery server **410** further includes a service administration block **430** to administer the delivery server service.

Delivery server **410** includes various modules to deal with both the content and the metadata associated with that content. A first module is the message broker and delivery queue **440,** which is a subsystem that consumes messages from content provider **412** and manages the content delivery queue. As will be appreciated by those skilled in the art, not all content for all client applications can be delivered at once and a delivery queue needs to be established in order to deliver the content in due course. For example, a device may be out of coverage and content may need to be stored.

Delivery server **410** further includes a flow control management block **442.** Flow control management block **442** allows for the control of content flow. For example, a mobile station with limited space may only be able to receive a certain amount of information. In this case, the mobile device, through a delivery client **140** as illustrated in **Figure 1****,** may ask delivery server **410** to stop the flow of data to delivery client **140.** The flow control management block **442** deals with this.

Alternatively, the mobile device can be off-line. Flow control management block **442** stops and starts the flow of data to delivery client **140** when content cannot be delivered as received by delivery server **410.**

A further component of delivery server **410** is push agents **444.** Push agents **444** are responsible for sending data to clients.

As will be appreciated by those skilled in the art, blocks **440, 442** and **444** deal with messaging only, and are not metadata related. In other words, the blocks handle the content of the messages, but not any metadata associated with the content.

A further component of delivery server **410** is the content metadata extractor and cache block **450.** Content metadata extractor and cache block **450** operate on enveloped content metadata. Specifically, in the envelope model of metadata system, which is described in more detail below, each logical component within the system can have metadata associated with content processing. This metadata allows the logical component to perform actions on the content. Each logical component thus needs to be able to extract the metadata that is associated with it.

Content metadata extractor and cache block **450** is responsible for extracting metadata that is associated with delivery server **410** and for caching this metadata. The caching function allows optimization by eliminating the need to pass identical metadata in subsequent content envelopes from the same content provider. The extraction and caching of metadata are described below.

Deferred retrieval message store block **452** is used when it is not effective to deliver content, or parts of it, to a client application. The deferred retrieval message store block **452** can be used to store content that is not delivered to the client until it is effective to send the content, or until the content is pulled by the client. The deferred retrieval message store could also be used to cache auxiliary content that could be optionally send to or pulled by the client depending on client application navigation through already delivered content.

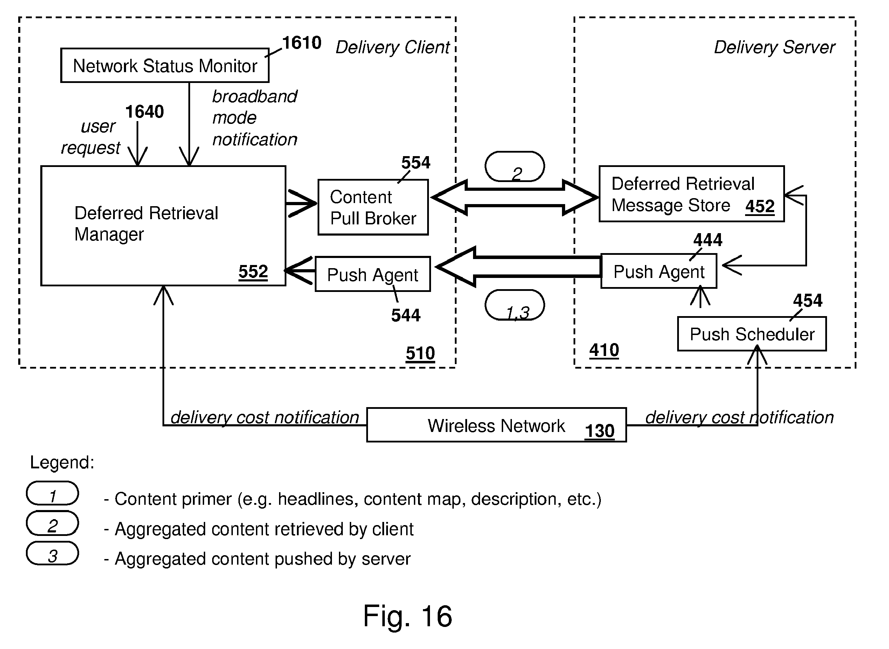

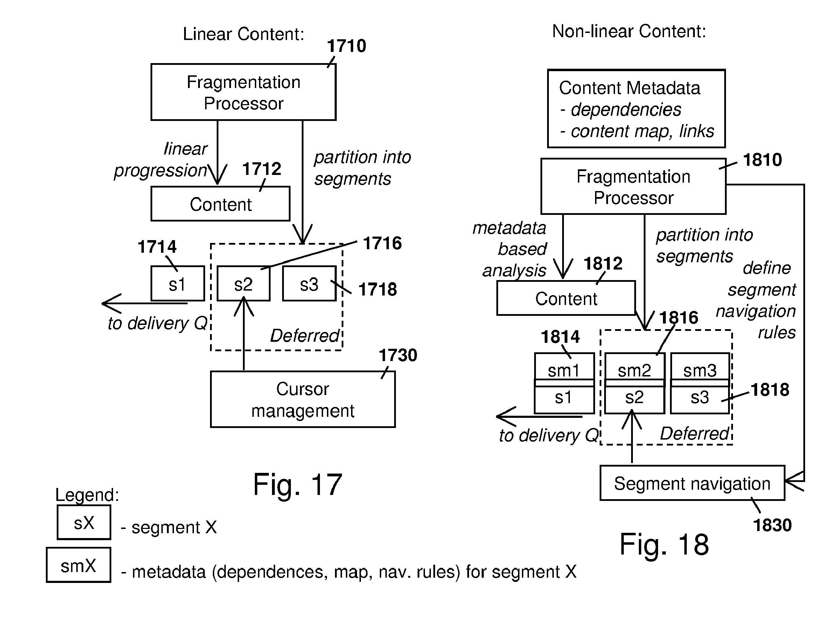

The purpose of deferred retrieval message store block **452** is better explained below with reference to **Figure 16** and **18****.** By way of example, deferred retrieval message store block **452** may be used is the case where a user has requested location information, such as a restaurant close to the location of the user. The content provider or the service provider may have a model of providing information where advertisers can pay to add their information to search requests. Thus, the user that's requesting restaurant information for a location may also have information about stores, golf courses, gyms or other services close to their location attended to their request. A content provider bundles the restaurant information requested with the additional information and passes it to delivery server **410.**

Delivery server **410** can, based on the metadata provided, create a content package to send to the client. The content package could include the information requested by the client, as well as a digest or summary of related information that the user may be interested in. The summary is sent to the user, but the deferred retrieval message store block **452** stores the actual data that was received from content provider **110.** Thus, if in the future the user wishes to obtain more detailed information about information within the digest, this information is already stored at delivery server **410.**

An alternative use for deferred retrieval message store block **452** is in the case where a user cannot accept the entire content at once. For example, if it is not feasible or economical to send all content to device, part of the content can be stored until a later time, when it can be pulled by the client or pushed when predefined rules are met. These rules can be specified by the network or service conditions by certain network or service conditions being satisfied. This is described in more detail with reference to **Figure 16** below.

Push scheduler **454** schedules delivery slots for clients. As described above, in some situations it may not be efficient to push all of the content at once. Push scheduler **454** can determine that it will push some information immediately and the rest according to a predefined schedule. Also, push scheduler **454** may use nature of the content to determine when the content should be pushed. Specifically, metadata may indicate that some content is a high priority or has an expiry that is limited in time, and this content may be pushed immediately, whereas content that has been indicated to have a low priority or with no expiry may be pushed later when conditions for passing data are more favorable.

As will be appreciated by those skilled in the art, blocks **450, 452** and **454** deal with both the content of the message and the metadata that is associated with the message.

Subscription and rules block **460** tracks applications that are registered to receive a service and monitors rules on how to handle particular content being delivered.
Content is typically delivered based on a subscription by the client or on behalf of the client. The user, for example if they want a particular service, can actively request subscriptions. Subscriptions can be made on behalf of a user, for example, if the user has signed an agreement with their service provider **120** to receive a benefit for a service. This could include the case where a user receives a preferred rate as long as the user agrees to receive a certain number of advertisements each day. In this case, the service provider **120** may make the subscription to the advertisement provider on behalf of the client.

When an application is deleted on a mobile device or when the application unregisters from a subscription, subscription and rules block **460** can unsubscribe that user.

Content dependencies block **462** is used by delivery server **410** to advertise services that a mobile device user can utilize. Thus, if a mobile device user does not have a screen or bandwidth or memory sufficient for the service, content dependencies block **462** could block the advertisement of that service to the user.

Content fragmentation block **464** is used to fragment content. This could be used, for example, if the mobile device is unable to receive all of the content at once. Content fragmentation block **464** is used to break the content into various components. It can be used in association with deferred retrieval and message store **452** to store fragmented content that has not yet been delivered.

Content expiry and replacement block **466** is used for two purposes. First, this block can be used to monitor subscriptions. Each subscription has an expiry time and when this expiry time is met, the subscription can be ended.

Also, content expiry and replacement block **466** can be used to monitor information. Certain content will have time limits on the validity of the information. For example, a traffic application used to monitor rush hour traffic will be very time dependent. If, for some reason, delivery server **410** is unable to deliver the content immediately to a mobile device, this content is stored in content storage **480** for future delivery. However, if the content is not delivered within a certain specified time period, then it could expire and not be delivered at all.

Similarly, content replacement deals with a situation where the information is being updated. For example, a client application that is receiving stock quotes may only want the latest stock quote. Thus, if the delivery server **410** is unable to deliver the stock quote to delivery client **140** and a subsequent stock quote is received from a content provider **110,** metadata within the subsequent stock quote can indicate that it should be used to replace the previous stock quote. Replacement of stored information rather than adding all information to a delivery queue frees space within content storage **480.**

Channel metadata repository **470** is used to store channel metadata, which is described in more detail below.

The above describes an exemplary delivery server **410** that can be used with the method and systems herein. The blocks and elements of delivery server **410** allow delivery server **410** to be used in a generic dynamic content delivery system where the type of content and handling of the content at an application can vary and is not predetermined.

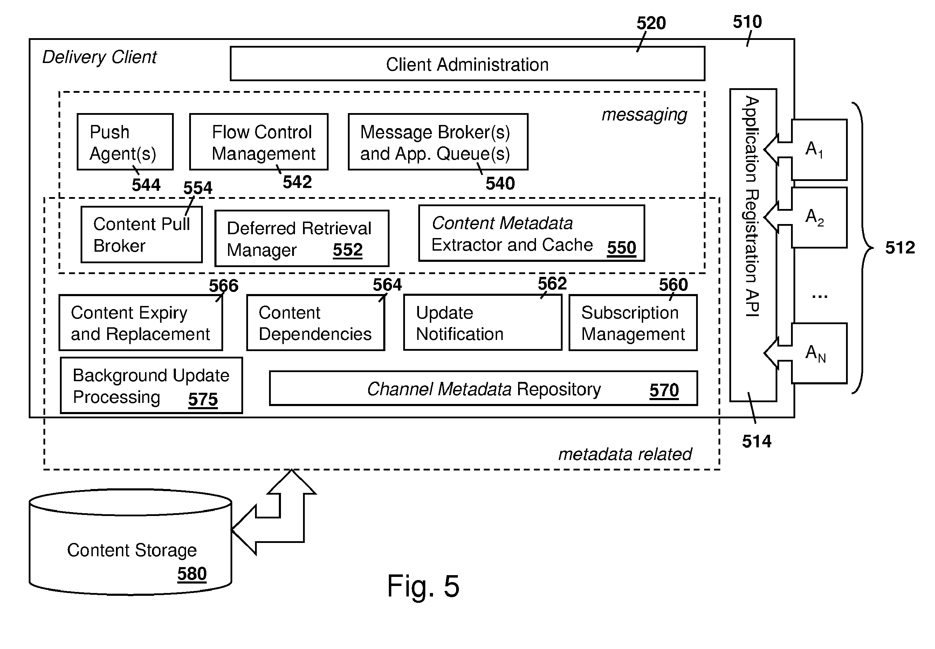

Reference is now made to **Figure 5. Figure 5** illustrates a delivery client **510** that can be used in association with the system and methods herein. Delivery client **510** can be the same as delivery client **140** from **Figures 1** and **2****.**

As will be appreciated by those skilled in the art, a delivery client **510** that is to be used in a generic system in which the content and processing of the content is not predetermined should include blocks or modules that can be used to accommodate both the content and the metadata associated with the content. The blocks defined with regard to **Figure 5** are not meant to be exhaustive, and other blocks could also exist within a delivery client **510.** Further, the blocks within delivery client **510** can, in some instances, be omitted without restricting the functionality of the other blocks within delivery client **510.**

A delivery client **510** services applications, and one or more applications **512** can register with delivery client **510.** The application registration uses an application provider interface **514** as the interface for registration and application provider interface **514** can further be used to extract channel metadata for the application, as described in more detail below.

Delivery client **510** includes client administration **520** used to administer the delivery client **510.**

As with sending server **410** of **Figure 4****,** delivery client **510** includes various blocks that deal with messaging, various blocks that deal with metadata, and various blocks that deal with both messaging and metadata.

Message broker and application queues **540** handle messages from delivery server **410** for delivery to applications **512.** An application queue is a queue of messages for applications **512.**

Flow control management block **542** is used to notify delivery server **410** of **Figure 4** to stop pushing content or to resume pushing content. This can be used, for example, when the delivery client **510** has a limited amount of memory that it can accept pushed content. In this case, before the push content is consumed delivery client **510** needs to stop the flow of content from delivery server **410.** Once the content has been consumed, flow control management block **542** can be used to start the flow of data again.

Push agents **544** within delivery client **510** are used to receive information from delivery server **410** of **Figure 4****.**

As will be appreciated by those skilled in the art, message brokers and application queues **540,** flow control management block **542,** and push agents **544** deal exclusively with messaging and not with metadata.

Content metadata extractor and cache block **550** is used to extract dynamic metadata destined for delivery client **510.** As indicated above with reference to delivery server **410** of **Figure 4****,** any of the processing elements in the dynamic content delivery architecture could have metadata destined for them and this metadata needs to be extracted. Thus metadata destined for delivery client 510 is extracted by content metadata extractor and cache block **550.**

Further, the content metadata extractor and cache block **550** is preferably adapted to cache metadata. Metadata for delivery client **510** that does not change between a first content package and a second content package does not need to be passed, saving processing time at delivery client **510** by not requiring the extraction of this metadata, and further saving network resources by not requiring metadata for delivery client **510** to be passed over wireless network **130.**

Deferred retrieval manager **552** is used for analyzing fragments of content that are received and putting the content together in the correct way. As described in more detail below, data can be either linear or non-linear. If the data is non-linear, then metadata is required in order to reconstitute it, and this is done by deferred retrieval manager **552.** The deferred retrieval manager **552** also is adapted to analyse a digest of information available in the deferred retrieval store **452** of delivery server **510** and drives the content pull broker **554** (described below) to retrieve this information when required by user. This includes predictive retrieval when content navigation enters a certain branch of the content structure graph or when bandwidth or cost conditions are satisfied

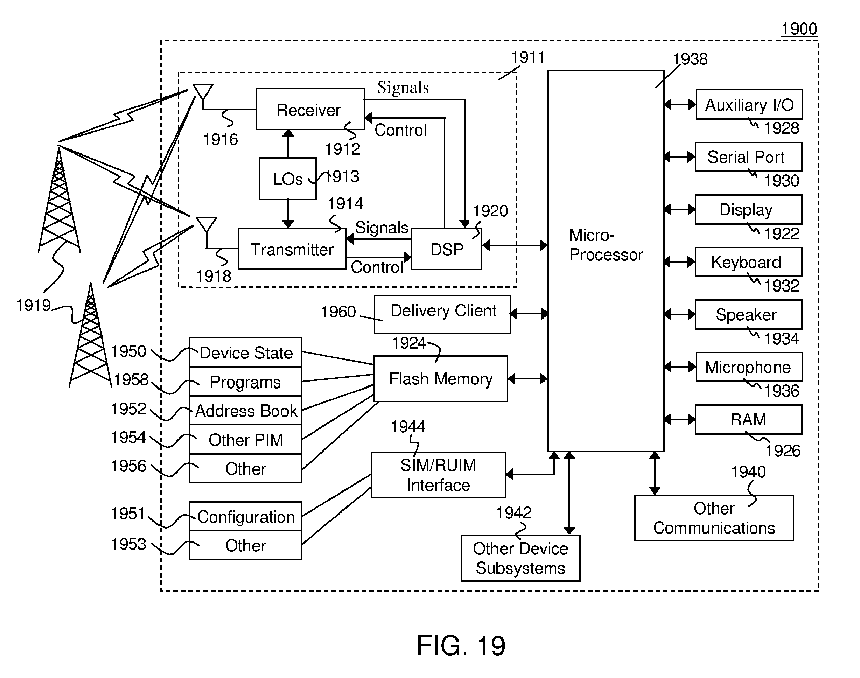

Content pull broker **554** is used in a push/pull model where the delivery client **510** is also able to pull content in certain situations. Such situations are described below in more detail with reference to **Figure 19****.**

As will be appreciated by those skilled in the art, content metadata extractor and cache **550,** deferred retrieval manager **552** and content pull broker **554** deal both with messaging content and with metadata.

Subscription management block **560** is the same as subscription and rules block **460** of **Figure 4****.** Specifically, subscription management block **560** is used to manage subscriptions. If an application de-registers or is deleted from a mobile device then subscription management block **560** ends the subscription. The subscription management block **560** can also re-subscribe on behalf of a client application when subscription channel expires.

Update notification block **562** works with client applications and is used to notify the applications that new content is waiting for them. This can be done in one of three ways:
a. A first way that update notification block **562** can notify an application **512** is for delivery client **510** to send the content to application **512** directly.
b. A second way that update notification block **562** can notify applications **512** of new content is to store the content in content storage **580** and to optionally notify applications **512** that content is waiting. Notification in this case is optional. Specifically, if an application 512 knows that information destined for it is stored within a specific memory block, one option for the application discovering that is has new data is to periodically poll the memory location to see whether there has been something written to it. Alternatively update notification block **562** can send a message to application **512** indicating that it has new data and possibly the location that the data is stored.
c. A third way that update notification **562** can notify applications **512** of new content is to store the content internally and notify the application. The application can then call on the delivery client to retrieve the content.

Content dependency block **564** is the same as content dependency block **462** of **Figure 4****,** and can determine whether to advertise the service to the mobile device.

Content expiry and replacement block **566** is the same as content replacement and expiry block **466** of **Figure 4****.** The expiry of content and replacement of content can thus be handled at delivery client **510** in addition to the push server or delivery server.

Channel metadata repository **570** is used to store channel metadata for application **512.**

Background update processing module **575** is used for performing updates when an application **512** is unavailable. The background update allows, for example, the replacement of data with newer data inside the application storage. Thereafter, when a user starts the application, the data displayed by the application is correct and updated.

Background update processing module **575** uses processing rules translate content into a format acceptable for an application. It can execute and process content in content store **580.**

By way of example, a task list that is updated for a contractor overnight could have tasks pushed to it. The task application is not started during this time, and background update processing module **575** can be used to update the content for the task application. This could be done with code for handling an extensible mark-up language (XML) file, and could exist on the device in a file called "handler.exe". Background update processing block **575** on delivery client **510** can run handler.exe, passing the XML document has a parameter. The handler then constructs the task into the application's internal format.

Once the background update processing block **575** of delivery client **510** constructs the task into the application internal format, it then can read the task into the task list from content storage **580** and append the new task to the list. It then can store the modified back to content storage **580** for when the task application next connects to delivery client **510.**

**Figure 5** therefore illustrates a delivery client **510** that can be used in a generic dynamic content delivery system, where content and processing of the content is dynamic and not predetermined. The blocks described above with reference to the delivery client **510** of **Figure 5** are used to accommodate the dynamic nature of the system.

As indicated above with reference to **Figure 3****,** content is associated with metadata to provide intelligence for the processing of the content. In accordance with the present method and system, metadata can be divided into two types of metadata. Specifically, static (channel) metadata and dynamic (content) metadata.

Due to the unlimited possibilities of types of content providers and applications, metadata is critical in order to build generic systems. The only way to handle the specific type of content is through metadata.

Static metadata is metadata that provides rules on how to process specific types of content. Static metadata can be broken into various levels of abstraction and include for example structural information about the content itself. For example, a Real-time Simple Syndication (RSS) document could be delivered with an RSS 2.0.XSD structure, and all content from that content provider will be delivered with this structure.

A further level of abstraction for static metadata includes the provision of processing rules for content subtype. This could be application specific. Thus, for example, a financial news application indicates that data should be extracted from a financial news RSS stream, stored in a predefined location, and that the application should be notified about the arrival of the information. The application always requires content destined for it to be handled in this way.

The static metadata (also referred to herein as channel metadata) stays the same throughout the subscription between the application and the content provider, and thus the static metadata can be established once for each element within the architecture and for each content delivery channel. In one embodiment this is done at the time of registration of the application or the content provider.

Dynamic metadata is metadata that is associated with a particular piece of content. For example, expiry information associated with a particular piece of data or replacement rules and information associated with a particular piece of data (i.e. document K replaces document L).

As indicated above with reference to **Figures 4** and **5****,** each processing entity can receive both static and dynamic metadata that is directed at that processing entity. Thus delivery server **410** uses the content metadata extractor and cache **450** to extract the dynamic metadata, and content expiry and replacement modular **466** is used to replace undelivered content with newer content received at delivery server **410.**

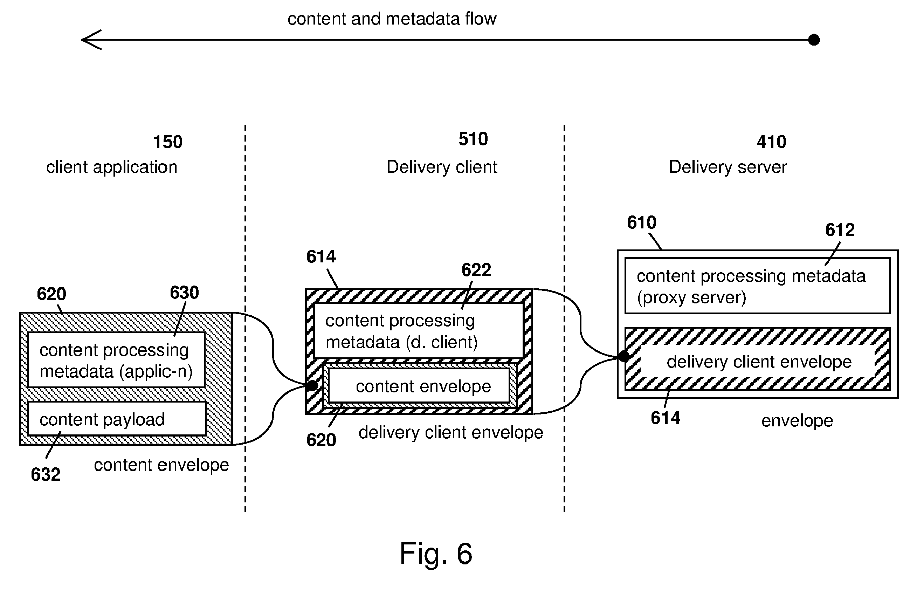

Reference is now made to **Figure 6. Figure 6** illustrates a multilayer envelope model for content metadata.

A delivery server **410** receives an envelope **610** that includes content processing metadata for the proxy server **612** and a delivery client envelope **614.** The delivery server **410** extracts content processing metadata **612** and uses this metadata to process delivery client envelope **614.** Metadata **612** dictates to delivery server what to do with the delivery client envelope **614.**

Delivery client envelope **614** is passed to delivery client **510** where it is broken into a content envelope **620** and a content processing metadata **622.** Content processing metadata **622** is used by delivery client **510** to process the content envelope **620.** For example, this can be used to instruct delivery client **510** to perform replacement of previously delivered content envelope **620** with the latest envelope if client application **150** is only interested in the latest version of the content.

Content envelope **620** is passed to client application **150.** Content envelope **620** includes content processing metadata **630** for the application and the content payload **632** that is to be consumed by client application **150.**

As will be appreciated by those skilled in the art, the nesting of envelopes in accordance with **Figure 6** provides for a rich dynamic environment in which processing can occur at any processing element of the architecture and which the content provider **110** can specify how specific content is to be dealt with. In one embodiment, metadata directed to a particular logical element is opaque to other processing elements.

Alternatively, the service provider **120** can also add metadata at delivery server **410** for processing at delivery client **510** or client application **150.**

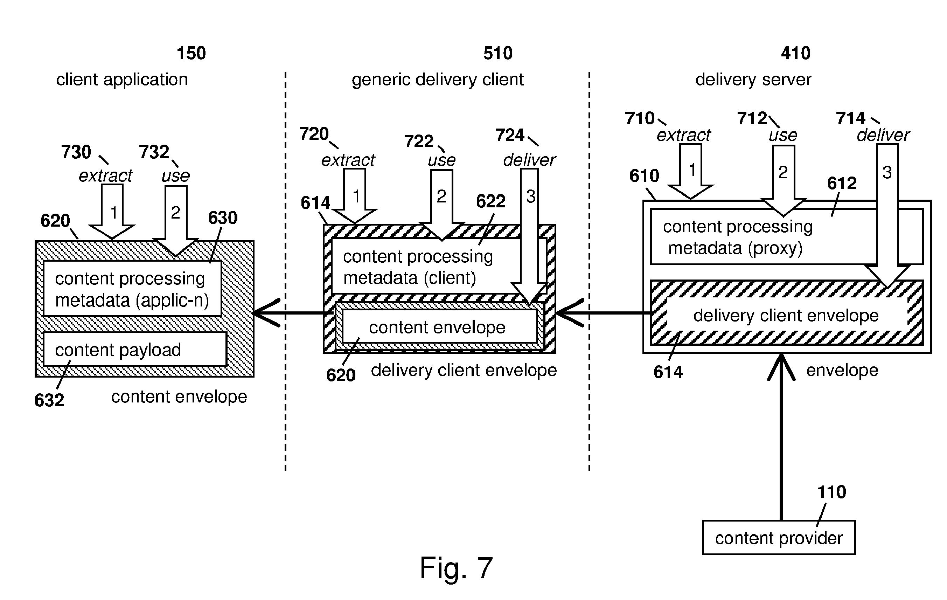

Referring to **Figure 7****,** this figure shows the envelope model of **Figure 6** and the steps that each processing element takes with an envelope. As illustrated in **Figure 7****,** delivery server **410** first extracts the metadata from envelope **610.** This is done in step **710.**

In step **712,** delivery server **410** uses the metadata to process the delivery client envelope **614.** In step **714,** delivery server **410** delivers the delivery client envelope **614** to delivery client **510.**

Similarly, delivery client **510,** in step **720** extracts the content processing metadata **622** from delivery client envelope **614.** In step **722,** delivery client **510** uses the content processing metadata **622** on content envelope **620.** In step **724,** the delivery client **510** delivers content envelope **620** to client application **150.**

In step **730,** client application **150** extracts the content processing metadata **630** and in step **732** uses the content processing metadata **630** on content payload **632.**

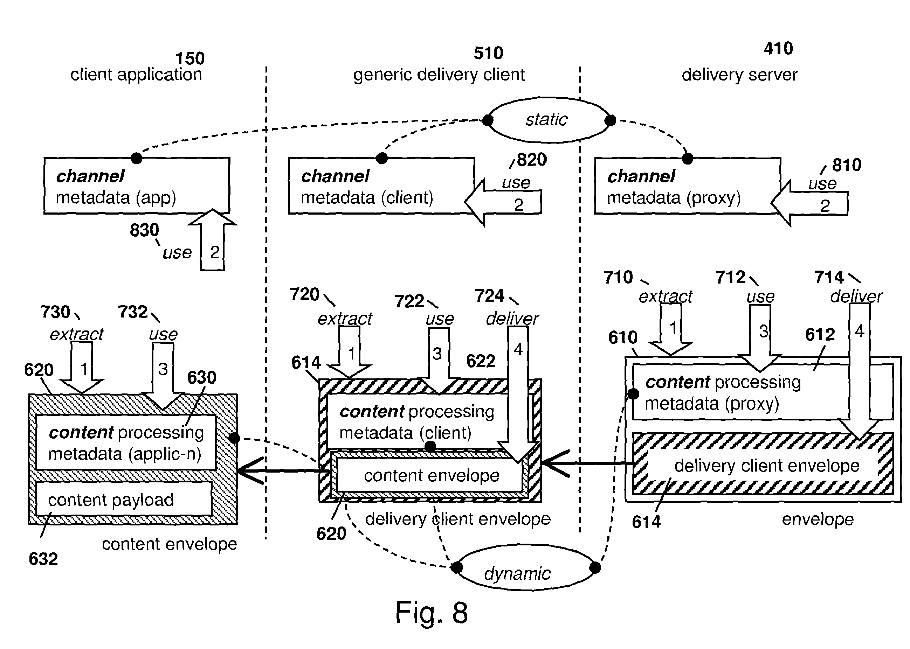

Referring to **Figure 8****,** this figure shows the method as illustrated in **Figure 7** with the additional step of the use of static or channel metadata. Specifically, after the metadata has been extracted in step **710** from envelope **610,** the delivery server **410** next uses the static channel metadata to process the delivery client envelope in step **810.** In step **712,** delivery server **410** next processes the content processing dynamic metadata **612.** Delivery server **410** next delivers the delivery client envelope **614** in step **714.**

Similarly, delivery client **510** extracts the content processing metadata **622** in step **720.** Delivery client **510** then uses the channel metadata in step **820** on the content within content envelope **620.** Delivery client **510** then, in step **722,** uses the dynamic content metadata in content processing metadata **622** prior to delivering content envelope **620** to client application **150** in step **724.**

Client application **150** first extracts, in step **730,** content processing metadata **630.** It then uses the channel metadata in step **830** on content payload **632.** Client application **150** then uses, in step **732,** content processing metadata **630** on content payload **632.**

As will be appreciated by those skilled in the art, the above model therefore allows for both static metadata to be applied for the channel along with dynamic metadata that is associated with the particular content being sent.

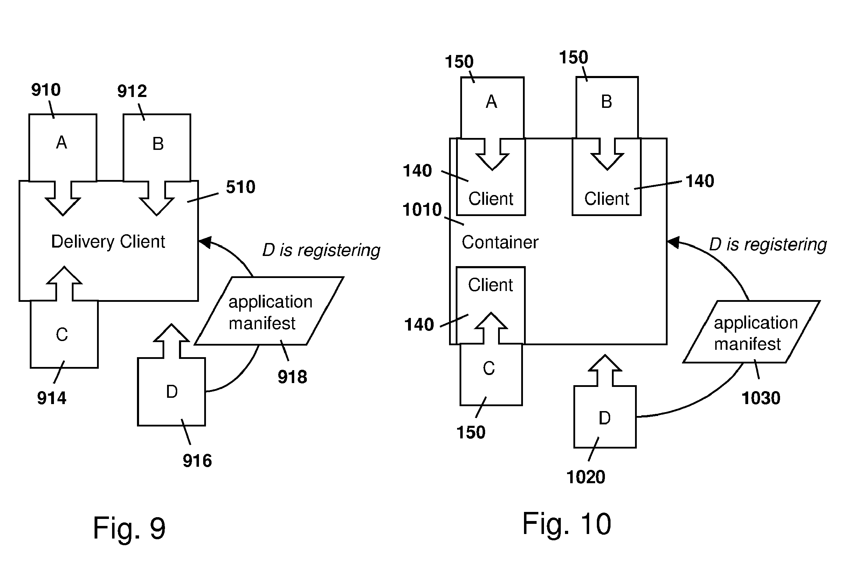

Reference is now made to **Figure 9****.** As will be appreciated from **Figure 5****,** delivery client **510** can serve multiple target applications **512** on a mobile device. An efficient runtime registration mechanism is required where applications can register with the dynamic content delivery framework without interrupting service for other applications.

Referring to **Figure 9****,** delivery client **510** includes three applications, specifically applications **910, 912** and **914** that are already registered with the delivery client. As will be appreciated, the plug in model is important because new devices can allow unlimited application types to be installed on the device. Further, applications can be installed dynamically, leading to a mobile device becoming an application platform. Because the device can be an application platform, it must be capable of dynamically incorporating new applications.

As seen in **Figure 9****,** application **916** wants to register with delivery client **510.** Application **916** includes an application manifest **918** that, in a preferred embodiment, provides the channel metadata for the application. Specifically, application manifest **918** provides information to delivery client **510,** and ultimately delivery server **410** and content provider **110** from **Figure 1** with the static metadata for the application. This can include, but is not limited to, what type of content the application expects, how the content will be delivered, whether the application needs notification, or other channel information that would be evident to those skilled in the art having regard to the present system and method.

Application **916** therefore registers with delivery client **510,** providing application manifest **918** to establish a channel to a content provider for servicing application **916.**

Referring to **Figure 10****,** an alternate model could be the model described with regard to architecture **220** of **Figure 2****.** Specifically, in the model of **Figure 10****,** a client application **150** is paired with a delivery client **140.** Each of the client application **150**/delivery client **140** pairs are coordinated with a container **1010.**

When application **1020** wishes to register with container **1010,** a client **140** is created, or if it already exists is used, by container **1010.** Further, in registration, the application **1020** provides an application manifest **1030** to container **1010,** thereby providing channel metadata (static metadata) for application **1020.**

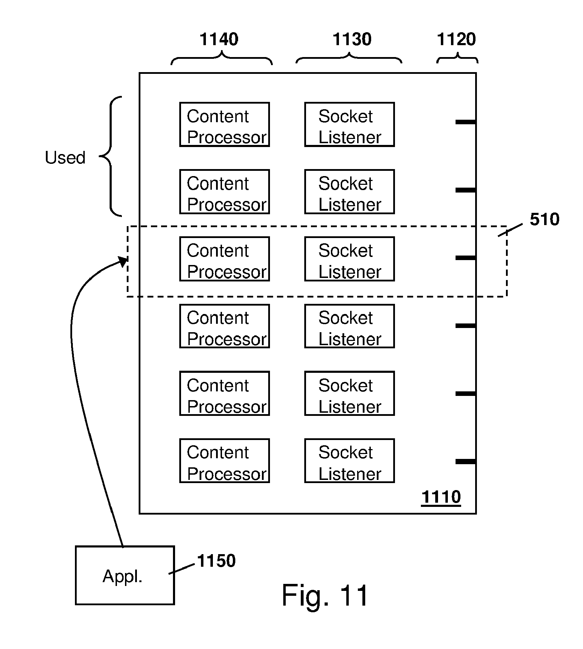

An alternative illustration of **Figure 10** is shown in **Figure 11****.** Specifically, a container **1110** manages/maintains a pool of delivery clients. When an application registers with the container it obtains a dedicated delivery client **510,** which in the simple case could be represented by a pair of a socket listener **1130** and content handler. The delivery client is returned to the pool when the application unregisters from the container (and content delivery service) or is deleted from the device.

Container 1110 includes sockets **1120** for communication. Further, container **1110** includes socket listeners **1130** and content processors **1140** assigned to a particular socket.

As seen in **Figure 11****,** various content processor and socket listener pairs are used by previously registered applications **150.**

When a new application **1150** wants to register with container **1110,** a new content processor and socket listener **1120** and **1130** are assigned to service application **1150.**

The above therefore provides for a generic framework in which a client application **150** that is new can be implemented and registered with a delivery client **510** or container **1010** or **1110,** thereby allowing the device to become an application platform capable of dynamically incorporating new applications. The passing of an application manifest **1030** or **918** from **Figures 9** and **10** above allows for the establishment of channel metadata, thereby allowing the content to be processed according to the application's requirements.

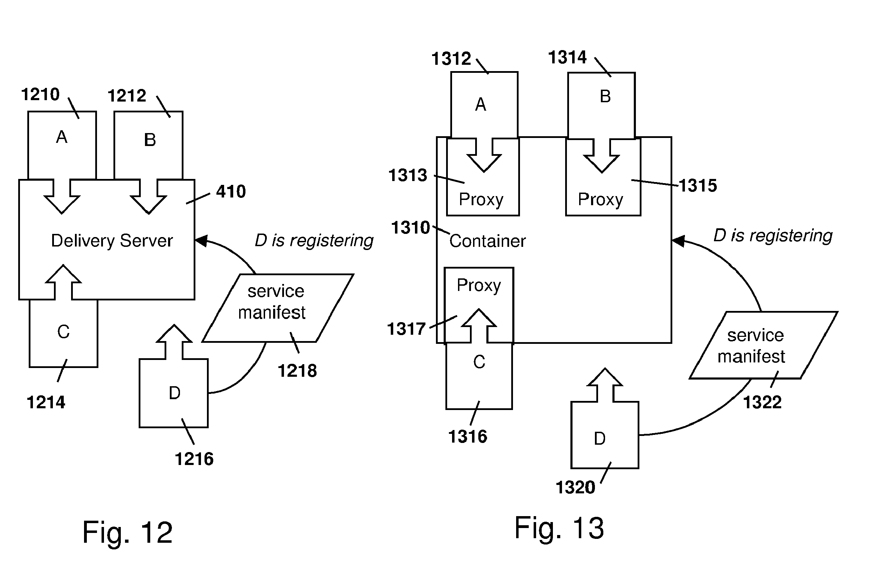

Referring to **Figure 12****,** content providers **110** similarly need to register with a delivery server **410.** As seen in **Figure 12****,** delivery server **410** includes three content providers, namely, **1210, 1212** and **1214,** already registered with delivery server **410.** Content provider **1216** desires to register with delivery server **410.**

Similarly to the application manifest **918** illustrated in **Figure 9** provided by an application **916** when registering with delivery client **510,** content provider **1216** includes a service manifest **1218** that is passed to delivery server **410** when content provider **1216** registers. Service manifest **1218** includes information concerning the type of information that the content provider will provide, how often it provides this information, the format of the information, and any other information that is useful for the service or for advertisement of the service. Other information is possible.

Delivery server **410** thus uses service manifest **1218** to establish channel (static) metadata for content provider **1216.**

Referring to **Figure 13****,** an alternative embodiment, represented by architecture **230** of **Figure 2****,** is to have a container with a number of delivery server **122** and content provider **110** pairings. As with **Figure 12****,** various applications could already be registered with container **1310,** and in the example of **Figure 12****,** applications **1312, 1314** and **1316** are already registered with delivery servers **1313, 1315** and **1317** respectively.

A new application **1320** wants to register with container **1310.** Thus, container **1310** creates a new proxy (not shown) or uses an existing proxy (not shown) with which it associates content provider **1320.** Further, content provider **1320** provides service manifest **1322** to describe the content that content provider **1320** will be providing, thereby allowing the establishment of channel metadata.

As will be appreciated by those skilled in the art, the embodiments of **Figures 9** and **10** show two options for delivery clients, either with shared applications or with dedicated delivery clients per application. One skilled in the art will realize that other embodiments are possible. Similarly, with respect to **Figures 12** and **13****,** a delivery server with multiple content providers registered to it is shown or a dedicated delivery server for each content provider, and embodied in a container is shown.

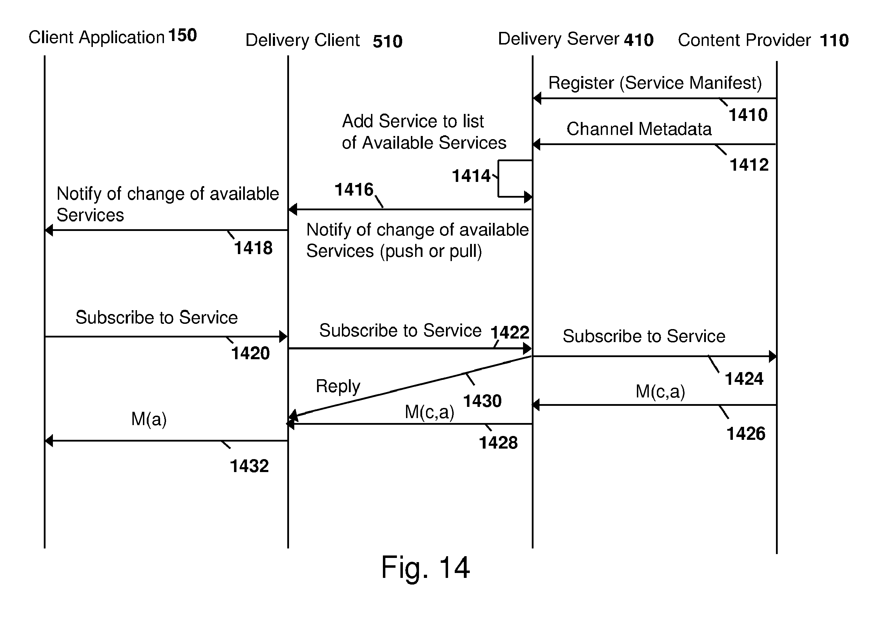

With reference to **Figure 14****,** messaging between a content provider **110** and a client application **150** is shown. Content provider **110** provides a registration message to delivery server **410.** This message can include the service manifest which can be used to provide channel metadata to delivery server **410.** This is done in step **1410.**

Content provider **110** may also or alternatively provide channel metadata in a subsequent message, as illustrated by step 1412.

Delivery server **410** then adds a service to a list of available services (the service catalogue) in step **1414.**

An optional step in the example of **Figure 14** is for delivery server **410** to notify delivery client **510** of the new service available in step **1416** and this notification may be propagated to a client application **150** in step **1418.**

As will be appreciated by those skilled in the art, steps **1416** and **1418** are optional, and other alternatives include client application **150** pulling the service catalogue periodically from delivery server **410** to view new services.

When a user or service provider for client application **150** decides that client application **150** should subscribe to a service, it sends a subscription message in step **1420.** The subscription message is further passed to delivery server **410** in step **1422.**

Once delivery server **410** receives the subscription message in step **1422,** two options are available. A first option is to send a message **1424** to content provider **110** for a subscription and then receive a message envelope that includes metadata back in step **1426.** The metadata could be device or device type specific.

Alternatively, delivery server **410** may receive the subscription message in step **1422** and immediately, based on information already provided by content provider **110** and stored on delivery server **410** reply in step **1430** to delivery client **510.** This reply is propagated to the client application **150** in step **1432.** As will be appreciated, the reply can include channel metadata specific for content provider **110.**

The difference in models can be dependent on who is customizing the data for the application. As will be appreciated, content provider **110** provides the best customization of content compared with other processing elements. However, service provider **120,** through delivery server **410,** can also provide for customization of content.

Further, as will be appreciated, the structure of the content could be dependent on the data that the application requires. For example, in a financial application, the application may want both stock quotes and currency rates. The following XML may be used:

```
<FIN>
              <quotes>
                     <quote ticker = ABC>
                             18.54
                     </quote>
                     <quote ticker = XYZ>
                             123.45
                     </quote>
        <quotes>
        <rates>
              <rate id = "US-CAN">
                       1.15
              </rate>
              <rate id = "US-EURO">
                       0.85
              </rate>
        </rates>
</FIN> 
```

If the user only wanted quotes and no currency exchange, the structure could change to:

```
<FIN>
            <quote ticker = ABC>
                    18.54
            </quote>
            <quote ticker = XYZ>
                    123.45
            </quote>
</FIN> 
```

The metadata can provide information to the application on the structure that of the data being passed.

Thus, two models exist. Static metadata can be provided to delivery server **410** and to delivery client **510** either during registration or afterwards.
Alternatively, the metadata for delivery server **410** and delivery client **510** can be pre-provisioned, i.e. information is stored at a delivery client or a delivery server until an application registers with a client.

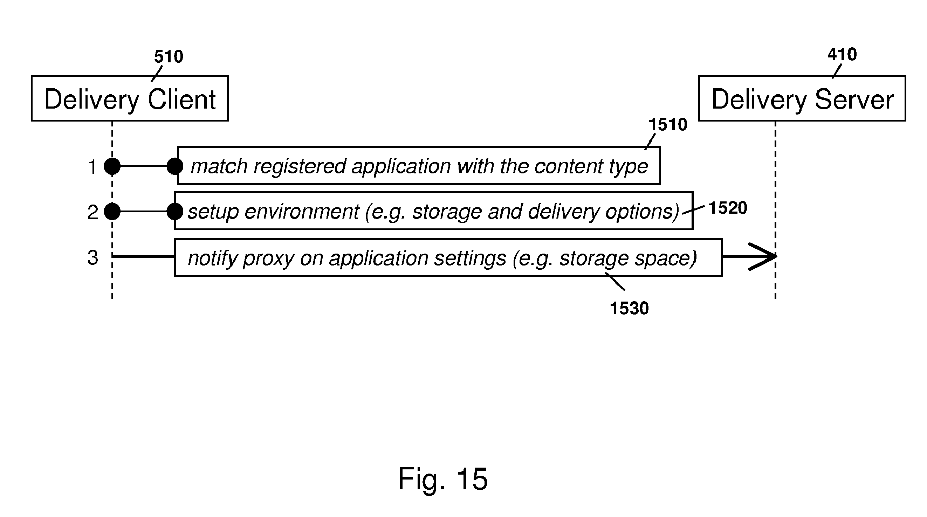

Reference is now made to **Figure 15. Figure 15** shows logical steps that occur upon registration of an application with a delivery client **510.**

Once an application registers with delivery client **510,** a first step **1510** is to match the registered application with the content type required by the application. This is known from the application manifest **918** as illustrated in **Figure 9****.**

A second step **1520** is to set up the environment for the application. These include but are not limited to storage and delivery options for the application. For example, an application may limit transmissions to a predetermined amount of data. The delivery client **510** in a flow control event, or if the application or client is out of touch, may require the caching of the data for the application and optionally to notify the application that data is waiting.

A third step **1530,** is to notify delivery server **410** of the application settings. This includes for example available storage for the application or delivery client **510.** As will be appreciated, delivery server **410** should not send more data than delivery client **510** can store. Thus, the application settings could include an upper limit of the data that is passed. Referring to **Figures 4** and **5****,** this could invoke content fragmentation block **464** to fragment the content if it is greater than the application can process. Also, if the data is non-linear, content dependencies block **462** may be required to create metadata for content dependencies block **564** of **Figure 5** in order to allow content dependencies block **564** to reconstitute the data.

Referring again to **Figure 15****,** step **1530** can also indicate preference on data delivery. For example, the application may prefer certain types of data over others and these types of data may be given priority. Thus step **1530** can be used to establish a delivery schedule where data of type "A" is delivered immediately while data of type "B" can be delivered at a deferred time.

### Differential Metadata Updates

As will be appreciated by those skilled in the art, updating metadata on a channel wide basis can, in some instances, be problematic. Specifically, if a channel is used to convey content of different logical or physical types, or if the channel contains sub-channels, metadata may vary between content-items associated with different content types or sub-channels Therefore channel wide Metadata update is not applicable.

An example of the above is the utilization of two logical content types within a channel. For example, a user interested in financial information may be subscribed to a channel which provides both stock quotes and stock news. For each, the physical content type is text. However, metadata may be specifically targeted to either the stock quotes or the stock news and not both. In one case, metadata may be associated with a stock quote and may indicate an expiry of the data that does not correspond with the expiry of stock news data. Thus, if the stock news content item is sent following the stock quote content item and expiry date parameter from cached metadata for stock quote is applied to the stock news, the stock news content item will expire prematurely.

Similarly a channel may contain multiple physical content types. For example, a user may be subscribed to a television channel. The television channel could include the video and audio content in a binary form, but may also include a directory that is provided in text form. Thus, if metadata for the directory is changed, under channel wide metadata updates, metadata for the video and audio would also have to be updated or provided again.

With regard to sub-channels, as used herein a sub-channel is a logical delivery construct associated with a user subscription to the subset of content available over this channel. Thus, a sub-channel of a financial services channel may only provide a subset of stock quotes that the user is interested in, rather than the user receiving stock quotes for every stock available.

Updating metadata for an entire channel may be unnecessary on a sub-channel basis. For example, if a sub-channel includes a particular subset of stock quotes, if metadata changes for stock quotes that are outside of this subset, a channel wide metadata update would be unnecessary.

Preferably, differential metadata updates can be performed based on logical or physical content type, or based on sub-channel. This differential metadata could be signalled to a processing unit such as a delivery client, a client application or a delivery server, thus allowing the processing unit to only update the metadata associated with a particular logical or physical content type or sub-channel.

Referring again to **Figure 7****,** differential metadata could be delivered utilizing the enveloped model shown. In this case, a content provider **110** provides an envelope **610** to a delivery server **410.** In step **710** delivery server **410** extracts content processing metadata **612** destined for delivery server **410.** As will be appreciated by those skilled in the art, content processing metadata **612** could be differential metadata associated with a particular subset of logical or physical content types or sub-channels of the channel.

The delivery server **410** then uses the differential metadata **612** in step **712** and further delivers the delivery client envelope **614** to generic delivery client **510.**

Generic delivery client **510,** in step **720,** extracts content processing metadata **622.** As with the above, content processing metadata **622** could be differential metadata for a particular subset of logical or physical content types or sub-channels.

At step **724** generic delivery client **510** then delivers content envelope **620** to client application **150.**

Client application **150,** in step **730,** extracts content processing metadata **630.** As with the above, content processing metadata **630** could be differential metadata associated with a particular subset of logical or physical content types or sub-channels.

At step **732** client application **150** uses the differential metadata **630** and further consumes content payload **632.**

The above is also applicable to channel metadata. Reference is made to **Figure 8****.** In step **810** a delivery server **410** uses channel metadata. As with the above, channel metadata for delivery server **410** could be differential metadata associated with a particular logical or physical content type or sub-channel.

Further in step **820** a generic delivery client **510** uses channel metadata for the generic delivery client. Again, channel metadata for the generic delivery client can be differential metadata associated with a particular logical or physical content type or sub-channel.

Similarly, in step **830** a client application **150** uses channel metadata for the client application. In this case, a channel metadata for client application **150** could be differential metadata associated with a particular logical or physical content type or sub-channel.

Differential metadata can be used to modify to the previously cached version of metadata and to produce the updated version of metadata that is further be cached at each processing element, thereby saving network resources and device battery life by reducing the amount of metadata required to be passed. As will be appreciated, differential metadata allows for the updating of previously cached metadata, where the updating involves only the differential update. Otherwise, metadata previously cached that is not part of the differential update can be used with the content item.

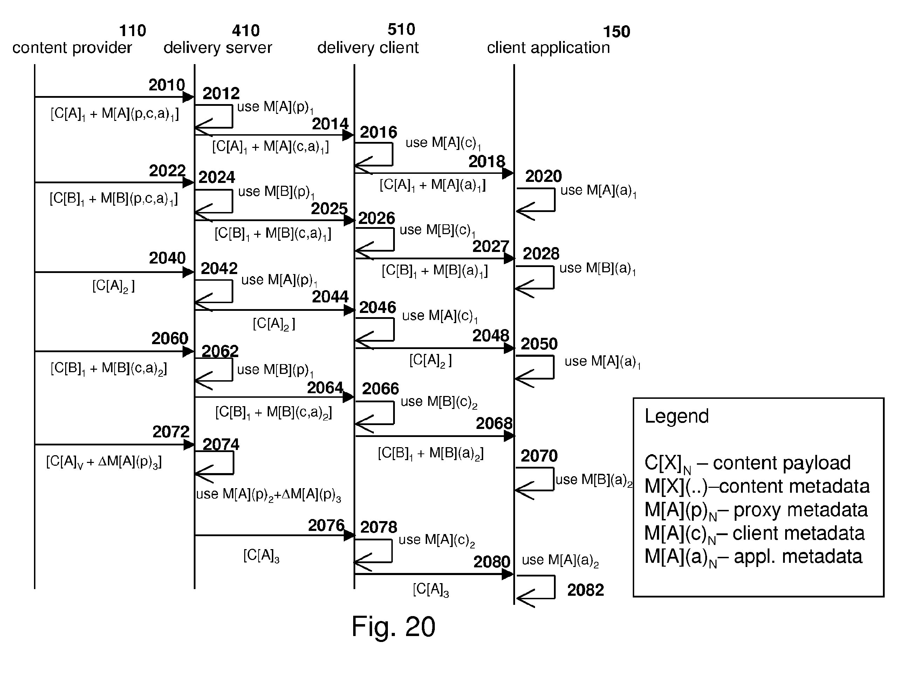

Reference is now made to **Figure 20. Figure 20** shows an embodiment in which caching of metadata attributes and associated differential updates of content metadata are done based on content type within a channel. One example of this could include a channel for television services including both a guide and content. As will be appreciated by those skilled in the art, the guide could be a first content type, such as text, while the actual television content could be a second content type such as binary.

As will be appreciated by those skilled in the art the use of two content types within the same channel could prohibit the caching of metadata, since the metadata associated with each content type is likely different.

One solution to this is to prohibit multiple content types on a channel. This would, in some cases, be too limiting. A solution could be to require a content types to have the same processing, no subscription filter could be allowed, or the same processing could be required for all sub-channels, among others. In another embodiment, caching could be done using, among other factors, the content type.

With regard to **Figure 20****,** content flows from a content provider **110** through a delivery server **410,** through a delivery client **510** and to a client application **150.** In the embodiment of **Figure 20****,** the content is associated with the particular content type. Specifically, in the example of **Figure 20****,** two types of content items exist for the channel, expressed as C[A] and C[B], where A and B represent different content types. Further, metadata for content items of type A and B is represented as M[A] and M[B].

In step **2010,** the first content item of content type A and associated content metadata for use by the delivery server **410,** delivery client **510,** and content application **150** are sent to delivery server **410.** Delivery server **410** uses the metadata for the delivery server to process the content item and further caches this metadata for use with the next content item of content type A. This done in step **2012.**

In step **2014,** the content for the first content type, along with metadata for the delivery client **510** and client application **150** are passed to delivery client **510.**

In step **2016,** delivery client **510** uses the metadata addressed for the delivery client and further caches this metadata.

In step **2018,** content for the first content type along with the metadata for client application **150** are passed to client application **150.** In step **2020,** client application 150 uses the metadata and caches the metadata. Client application **150** further consumes the content.

In step **2022,** content item of a second content type, along with metadata associated with this content item, are passed from the content provider **110** to delivery server **410.** Delivery server **410** uses the metadata it received from the message in step **2022** and further caches this metadata. This is done in step **2024.** As will be appreciated by those skilled in the art, the caching in step **2024** is done in conjunction to the caching of step **2012,** and the caching of step **2024** does not erase the metadata for the first content type that was cached in step **2012.**

In step **2025,** the content of the second content type, along with metadata for delivery client **510** and client application **150** are passed to delivery client **510.**

At step **2026,** delivery client **510** uses the metadata and further caches the metadata.

At step **2027,** the content of the second content type, along with metadata for client application **150,** are passed to client application **150.** Client application **150** then uses the metadata, caches the metadata and consumes the content. This is done at step **2028.**

At step **2040,** another content item of the first content type is available and is passed from content provider **110.** No metadata is passed since the metadata associated with the new content is identical to the metadata received with the content item at step 2010.

At step **2042,** the delivery server **410** receives the content without any metadata and therefore goes to its cache to find metadata. In the case of step **2042,** delivery server **410** considers the content type when looking for cached metadata. Specifically, delivery server **410** cached metadata both in steps **2012** and **2024.** However, the metadata cached in step **2024** is associated with the second content type and is therefore not applied to the content of the first content type received from the content provider.

At step **2044,** the content is passed to delivery client **510.** At step **2046,** delivery client **510** goes to its cache to find metadata associated with the first content type that is stored in the cache. This is done because no metadata was received along with the content.

At step **2048,** the content is passed to client application **150.**

At step **2050,** client application **150** looks to its cache for metadata associated with the first content type and uses the metadata from the cache when consuming the content.

At step **2060,** content of the second content type is passed, along with metadata for delivery client **510** and client application **150.**

At step **2062,** delivery server **410** does not receive metadata with the content from step **2060** and therefore goes to its cache. In this case, delivery server **410** utilizes the cached metadata for the second content type.

At step **2064,** the content of the second content type, along with the metadata for delivery client **510** and client application **150** are passed to delivery client **510.** Delivery client **510** uses the metadata it received from step **2064** and further caches this metadata. As will be appreciated by those skilled in the art, the caching of the metadata received at step **2064** replaces the previously cached metadata for the second content type performed in step **2026.** The caching and use of the metadata is done at step **2066.**

At step **2068,** the content, along with metadata for client application **150** are passed to client application **150.** In step **2070,** client application **150** uses the metadata that it received in step **2068,** caches this metadata replacing the metadata previously cached for the second content type, and consumes the content.

In a further example, at step **2072** content of a first content type along with a metadata delta for the delivery server **410** are passed to delivery server **410.** As will be appreciated by those skilled in the art, a "delta" could mean different things in the particular implementation of differential metadata updates. One embodiment would be to provide a subset of updated parameters: for example, if metadata for processing tier consists of 10 attributes and only 2 of these changed from one content item to another, the "delta" would mean providing these 2 attributes, while reusing remaining cached 8. And as a result, caching updated 10 attributes: 8 "old" and 2 "new".

Delivery server **410,** at step **2074,** receives the content of the first content type along with the delta of the metadata. Delivery server **410** applies the delta on top of the metadata previously cached for the first content type in step **2074.** It uses the combined old metadata and delta for processing of the content item and further caches this new combined metadata for use with the next content item of this content type.

At step **2076,** content is passed to delivery client **510.** Delivery client **510** uses metadata associated with the first content type that it has previously cached in step **2078.**

At step **2080,** the content is passed from delivery client **510** to client application **150.** Client application **150,** in step **2082,** uses metadata for the first content type that it has previously cached and further consumes the content.

As can be seen from the above, metadata is cached based on the content type and only further metadata updates need to be provided based on the content type, thereby ensuring the effectiveness of the caching scheme. In one embodiment, the content type is associated with the multipurpose Internet mail extensions (MIME) type of the content. Thus, for the example of a channel for television, which includes both a content and a directory, the television content can be of MIME type corresponding to a binary and the television guide can be of MIME type corresponding to the text. The delivery framework can separately cache and update the content metadata associated with content items of different MIME types.

The above can further be applied to different logical content types within a channel. Thus using the example above, a stock quote and financial news, although both the same physical content type, could have metadata updated independently based on the differential metadata as shown in **Figure 20****.**

The above is not meant to be limited to two physical or logical content types within a channel, and any number of content types could be used in the caching of metadata.

In a further embodiment, the above can also be applied to sub-channels. A sub-channel, as used herein, refers to a logical content delivery construct associated with the particular logical or physical content type or with a subscription filter. A particular logical content construct could be defined based on the content specifics rather than the content type. For example, different behaviour (e.g. content expiry after a week as opposed to after a day) could be assigned to the content items of the same logical and physical type (e.g. stock news for stocks in my portfolio vs. stock news that I may be interested in), thus creating logical sub-channels with the metadata caching and updates managed per sub-channel.

A particular subscription filter could, for example, be a screen of a stock quote provider for stocks of "ABC" as opposed to a screen for stocks of "DEF".

A sub-channel, as will be appreciated by those skilled in the art is a channel to which a user filters are submitted during subscription. For example, a channel that provides a variety of financial information could have a filter applied to it that would create a sub-channel providing only stock quotes and financial news information.

Applying the example illustrated in **Figure 20****,** the metadata associated with one sub-channel could be cached and updated separately from metadata associated with a separate sub-channel. Thus, utilizing the financial example above, a sub-channel that includes both stock quotes and news financial information will store metadata that is different from a sub-channel that includes stock quote information. In this case, M[A] could be associated with stock quotes and news information for a first sub-channel and M[B] could be associated with stock quotes only for a second sub-channel.

Further, the above could also be utilized for channel metadata (static metadata). Thus, when a channel is being set up, the metadata utilized for each content type the channel will convey could be cached separately. Subsequently, if channel metadata needs to be changed, this could be done based on content type level rather than all channel metadata.

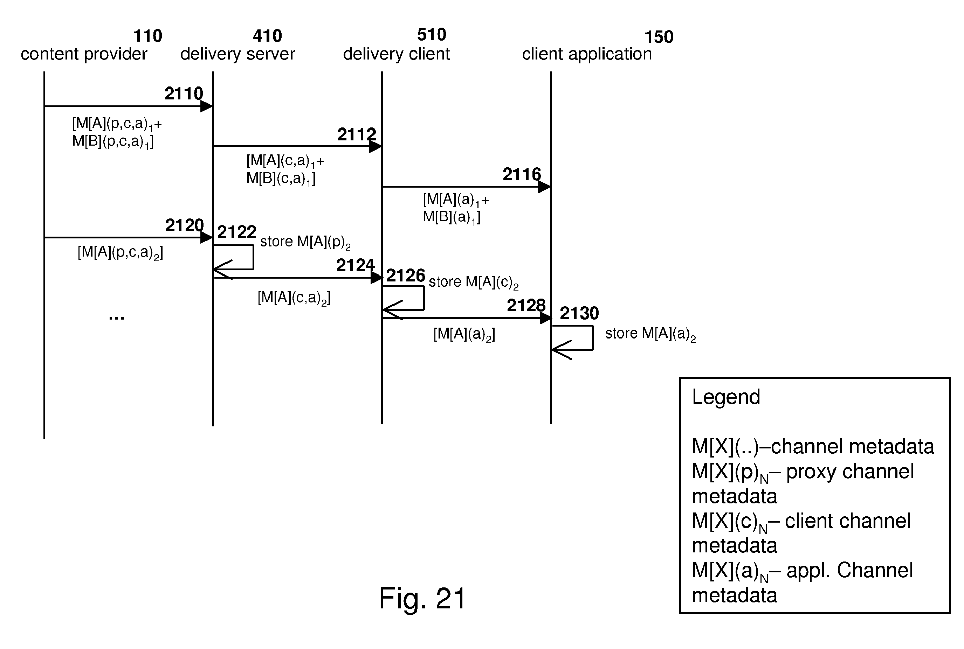

Reference is now made to **Figure 21. Figure 21** illustrates the setting up of channel metadata. In particular, when a user subscribes to a particular content provider, channel metadata is established at delivery server **410,** delivery client **510** and client application **150.** In the case of **Figure 21****,** the metadata is further broken into metadata for a particular content type. As illustrated in steps **2110, 2112** and **2116,** metadata for each content type, shown as M[A] for metadata for a first content type and M[B] for metadata for a second content type, is propagated to the processing elements.

Subsequently, metadata for the channel needs to be changed for the first content type. In step **2120,** metadata associated with the first content type for delivery server **410,** delivery client **510** and client application **150** is passed to delivery server **410.** At step **2122,** delivery server **410** replaces the metadata it has previously stored with the metadata received from step **2122.**

At step **2126,** channel metadata associated with the first content type is passed to delivery client **510** and at step **2128,** delivery client **510** replaces the channel metadata for the first content type with the channel metadata received at step **2128.**

At step **2130,** channel metadata associated with the first content type is passed to client application **150.** At step **2132,** client application **150** replaces channel metadata with the channel metadata received at step **2130.**

As will be appreciated by those skilled in the art, the channel metadata updates can be limited to particular processing elements and the processing elements not included with the changed metadata will simply utilize the previously stored channel metadata. Further, a delta approach can also be utilized for channel metadata thereby allowing less data to be passed when updating the channel metadata.

The above also lends itself to a syndication model and reference is now made to **Figure 16****.**

As will be appreciated by those skilled in the art, a mobile device may not wish to receive large amounts of data when network conditions are not optimal for the receiving of large amounts of data. Further, network operators may wish to avoid sending large amounts of data during peak periods of bandwidth usage in order to spread network traffic more evenly over time. This can be accomplished using a push/pull model as illustrated in **Figure 16****.**

As described with reference to **Figure 4** above, content may be provided that includes more information than the user may currently needs. For example, if the user requests location information for restaurants within his area, a service provider may wish to add advertising such as other services available in the area. However, the service provider may not wish to push this additional content immediately to the user, but instead provide a primer such as a headline or a table of contents showing the additional content.

In other situations, the content may be too large to send to the user, and the user may receive only the first part of the content and the remainder of the content is stored in a deferred retrieval message store **452.**

Thereafter, the stored content can be passed to delivery client **510** either by delivery server **410** or when asked for my delivery client **510.**

Delivery client **510** includes a network status monitor **1910** which can monitor the status of the network. Delivery client **510** may wish to only receive extra data in certain conditions. For example, on a hybrid mobile device that has a WiFi and a cellular option, it is cheaper to provide data on the WiFi connection, and thus network status monitor **1610** could wait until the delivery client **510** is connected to a WiFi network prior to getting the deferred content. Alternatively, network status monitor could check whether the client is roaming in a foreign network or connected to the home network in order to minimize roaming charges. Network status monitor may also check to see whether a dedicated data channel is established for the device. One skilled in the art will realize that network status monitor **1610** could also check for various other preconditions in the network before requesting deferred data to be passed to delivery client **510.**

A wireless network **130** could also provide information to either or both of delivery client **510** and delivery server **410** concerning the costs of delivery of data. As will be appreciated by those skilled in the art, various peak periods occur for the delivery of content. In the case of traffic information, the peak periods may be at the beginning and end of the workday when people are coming to and going from work. For stock quotes the peak period may be during the time that the market is open. Other peak periods will exist. In order to average the data traffic, it may be desirable for the network to charge different rates based on the current data usage in the network. Thus during peak periods a higher rate may be charged than a non-peak period such as the middle of the night. Wireless network **130** therefore provides delivery cost notifications to a deferred retrieval manager **552** on a delivery client **510** and to push scheduler **454** on delivery server **410.**

In one embodiment, data from content provider **110** and passed to delivery server **410** can be ranked based on its importance to the client. Certain information can be designated through metadata to be delivered immediately. Other information can be designated to be delivered when the network cost is less than a first value (for example 10¢ per megabyte) and other data may be designated to be delivered when the network costs drop below a second value (for example, 5¢ per megabyte). Thus push scheduler **454** considers the data that is stored in deferred retrieval message store **452** and instructs push agent **444** to pass deferred data to push agent **544** on delivery client **510.**

Alternatively, deferred retrieval manager **552** could also monitor network conditions as sent from wireless network **130** and if the data rate is below a certain rate can ask content pull broker **554** to pull content from deferred retrieval message store **452.**

Alternatively, deferred retrieval manager **552** could see that the network status is favorable for pulling larger amounts of data, such as if the mobile device has connected with a WiFi network, and ask content pull broker **554** to pull the data from deferred retrieval message store **452.**

As will be further appreciated, a user can always request to have the content pulled. Thus user request **1640** could also be used to trigger content pull broker **554** to pull the data from deferred retrieval message store **452.**

The rules stored in push scheduler **454** and deferred retrieval manager **552** could be static metadata based on a classification of content. The rules could also be based on dynamic metadata for the particular data that has been passed. In this case the content provider **110** has classified the data.

Reference is now made to **Figure 17****.** As will be appreciated by those skilled in the art, data can be one of two forms, linear or non-linear. Linear data could, for example, be arrays or strings or content that flows in a linear fashion. Non-linear data, conversely, is data that does not linearly relate to each other and can include complex dependencies with content maps or links.

For linear content, fragmentation merely involves the breaking of the data into various components based on linear progression. The data is partitioned into segments and the segments are delivered to the delivery client **410.** As indicated in **Figure 17****,** fragmentation processor **1710** interacts with content **1712** and decides that the content can be parsed with linear progression. The fragmentation processor **1710** next partitions the data into segments **1714, 1716** and **1718** in the example of **Figure 17****,** and, as illustrated in **Figure 17****,** passes the first segment **1714** while deferring the passing of the second and third segments **1716** and **1718** respectively.

The cursor management module **1730** keeps track of which segment has been delivered and delivers the next segment in order.

Referring to **Figure 18****,** non-linear content needs to be partitioned in a more intelligent way. Further, at the other end, in order to reconstitute the segments, metadata is required.

A fragmentation processor **1810** analyses the content based on a metadata based analysis. These could include keeping certain segments or data elements together if logically required. Fragmentation processor **1810** analyses content **1812** and partitions the content into segments based on logical rules. Each segment includes the content plus metadata including for example, dependencies, maps, and navigation rules for each segment.

Once partitioned, a first segment **1814** is sent to delivery client **510** and the passing of the remainder of the segments **1816** and **1818** is deferred as illustrated in **Figure 18****.** Segment navigation block **1830** deals with which segment to send next. As will be appreciated by those skilled in the art, first segment **1814** includes a data portion and a metadata portion. The metadata portion of segment **1814** is a layer of metadata that is added by the fragmentation processor **1810** to indicate to content dependencies module **564** how to reconstitute the content. Data portion of first segment **1814** can include both content and metadata associated with the channel or with the content.

Segment navigation block **1830** is adapted to process how a user travels through the data. For example, if the data is in a tree format and the user goes down a first branch of the tree, segment navigation block **1830** may pass to delivery client **410** other branches in the tree that can be reached from the element that the user has navigated to.

For example, a tree could include an employee database that has employee names along with a structure for the corporation. Based on **Figure 18****,** if the user navigates into a specific department of the organization, the segmentation navigation block **1830** might forward the group fragments for groups within that department. If the user then navigates into a specific group within the department, the segmentation navigation block **2130** might then pass information fragments about the employees within that group.

The above therefore requires that the data be partitioned into logical components. Identifiers are assigned to all types and content, and structural information is created passing the information with the primer.

The above therefore provides an architecture for dynamic content delivery that can used with generic systems where applications and content can be added without changing the structure of the system. The content can be tailored to fit the application receiving it, and be fragmented according to the above.

As will be appreciated, the delivery client and client applications can reside on any mobile device. One exemplary mobile device is described below with reference to **Figure 19****.** This is not meant to be limiting, but is provided for illustrative purposes.

**Figure 19** is a block diagram illustrating a mobile station apt to be used with preferred embodiments of the apparatus and method of the present application. Mobile station **1900** is preferably a two-way wireless communication device having at least voice and data communication capabilities. Mobile station **1900** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station **1900** is enabled for two-way communication, it will incorporate a communication subsystem **1911,** including both a receiver **1912** and a transmitter **1914,** as well as associated components such as one or more, preferably embedded or internal, antenna elements **1916** and **1918,** local oscillators (LOs) **1913,** and a processing module such as a digital signal processor (DSP) **1920.** As will be apparent to those skilled in the field of communications, the particular design of the communication subsystem **1911** will be dependent upon the communication network in which the device is intended to operate.

Network access requirements will also vary depending upon the type of network **1919.** In some CDMA networks network access is associated with a subscriber or user of mobile station **1900.** A CDMA mobile station may require a removable user identity module (RUIM) or a subscriber identity module (SIM) card in order to operate on a CDMA network.. The SIM/RUIM interface **1944** is normally similar to a card-slot into which a SIM/RUIM card can be inserted and ejected like a diskette or PCMCIA card. The SIM/RUIM card can have approximately 64K of memory and hold many key configuration **1951,** and other information **1953** such as identification, and subscriber related information.

When required network registration or activation procedures have been completed, mobile station **1900** may send and receive communication signals over the network **1919.** As illustrated in **Figure 19****,** network **1919** can consist of multiple base stations communicating with the mobile device. For example, in a hybrid CDMA 1x EVDO system, a CDMA base station and an EVDO base station communicate with the mobile station and the mobile station is connected to both simultaneously. The EVDO and CDMA 1x base stations use different paging slots to communicate with the mobile device.

Signals received by antenna **1916** through communication network **1919** are input to receiver **1912,** which may perform such common receiver functions as signal amplification, frequency down conversion, filtering, channel selection and the like, and in the example system shown in **Figure 19****,** analog to digital (A/D) conversion. A/D conversion of a received signal allows more complex communication functions such as demodulation and decoding to be performed in the DSP **1920.** In a similar manner, signals to be transmitted are processed, including modulation and encoding for example, by DSP **1920** and input to transmitter **1914** for digital to analog conversion, frequency up conversion, filtering, amplification and transmission over the communication network **1919** via antenna **1918.** DSP **1920** not only processes communication signals, but also provides for receiver and transmitter control. For example, the gains applied to communication signals in receiver **1912** and transmitter **1914** may be adaptively controlled through automatic gain control algorithms implemented in DSP **1920.**

Mobile station **1900** preferably includes a microprocessor **1938** which controls the overall operation of the device. Communication functions, including at least data and voice communications, are performed through communication subsystem **1911.** Microprocessor **1938** also interacts with further device subsystems such as the display **1922,** flash memory **1924,** random access memory (RAM) **1926,** auxiliary input/output (I/O) subsystems **1928,** serial port **1930,** one or more keyboards or keypads **1932,** speaker **1934,** microphone **1936,** other communication subsystem **1940** such as a short-range communications subsystem and any other device subsystems generally designated as **1942.** Serial port **1930** could include a USB port or other port known to those in the art.

Some of the subsystems shown in **Figure 19** perform communication-related functions, whereas other subsystems may provide "resident" or on-device functions. Notably, some subsystems, such as keyboard **1932** and display **1922,** for example, may be used for both communication-related functions, such as entering a text message for transmission over a communication network, and device-resident functions such as a calculator or task list.

Operating system software used by the microprocessor **1938** is preferably stored in a persistent store such as flash memory **1924,** which may instead be a read-only memory (ROM) or similar storage element (not shown). Those skilled in the art will appreciate that the operating system, specific device applications, or parts thereof, may be temporarily loaded into a volatile memory such as RAM **1926.** Received communication signals may also be stored in RAM **1926.**

As shown, flash memory **1924** can be segregated into different areas for both computer programs **1958** and program data storage **1950, 1952, 1954** and **1956.** These different storage types indicate that each program can allocate a portion of flash memory **1924** for their own data storage requirements. Microprocessor **1938,** in addition to its operating system functions, preferably enables execution of software applications on the mobile station. A predetermined set of applications that control basic operations, including at least data and voice communication applications for example, will normally be installed on mobile station **1900** during manufacturing. Other applications could be installed subsequently or dynamically.

A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network **1919.** In a preferred embodiment, the PIM data items are seamlessly integrated, synchronized and updated, via the wireless network **1919,** with the mobile station user's corresponding data items stored or associated with a host computer system. Further applications may also be loaded onto the mobile station **1900** through the network **1919,** an auxiliary I/O subsystem **1928,** serial port **1930,** short-range communications subsystem **1940** or any other suitable subsystem **1942,** and installed by a user in the RAM **1926** or preferably a non-volatile store (not shown) for execution by the microprocessor **1938.** Such flexibility in application installation increases the functionality of the device and may provide enhanced on-device functions, communication-related functions, or both. For example, secure communication applications may enable electronic commerce functions and other such financial transactions to be performed using the mobile station **1900.**

In a data communication mode, a received signal such as a text message or web page download will be processed by the communication subsystem **1911** and input to the microprocessor **1938,** which preferably further processes the received signal for output to the display **1922,** or alternatively to an auxiliary I/O device **1928.** A delivery client **1960,** which could be equivalent to delivery clients **140** and **510,** could also process the input.

A user of mobile station **1900** may also compose data items such as email messages for example, using the keyboard **1932,** which is preferably a complete alphanumeric keyboard or telephone-type keypad, in conjunction with the display **1922** and possibly an auxiliary I/O device **1928.** Such composed items may then be transmitted over a communication network through the communication subsystem **1911.**

For voice communications, overall operation of mobile station **1900** is similar, except that received signals would preferably be output to a speaker **1934** and signals for transmission would be generated by a microphone **1936.** Alternative voice or audio I/O subsystems, such as a voice message recording subsystem, may also be implemented on mobile station **1900.** Although voice or audio signal output is preferably accomplished primarily through the speaker **1934,** display**1922** may also be used to provide an indication of the identity of a calling party, the duration of a voice call, or other voice call related information for example.

Serial port **1930** in **Figure 19****,** would normally be implemented in a personal digital assistant (PDA)-type mobile station for which synchronization with a user's desktop computer (not shown) may be desirable, but is an optional device component. Such a port **1930** would enable a user to set preferences through an external device or software application and would extend the capabilities of mobile station **1900** by providing for information or software downloads to mobile station **1900** other than through a wireless communication network. The alternate download path may for example be used to load an encryption key onto the device through a direct and thus reliable and trusted connection to thereby enable secure device communication. As will be appreciated by those skilled in the art, serial port **1930** can further be used to connect the mobile device to a computer to act as a modem.

Other communications subsystems **1940,** such as a short-range communications subsystem, is a further optional component which may provide for communication between mobile station **1900** and different systems or devices, which need not necessarily be similar devices. For example, the subsystem **1940** may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method of optimizing content delivery within a content delivery channel at a processing element in a dynamic content delivery architecture, the content delivery channel having a plurality of logical or physical content types or a plurality of sub-channels, the method comprising:
receiving an envelope at the processing element, the envelope containing content and/or metadata;
checking any received metadata to determine whether the received metadata comprises metadata for a subset of the plurality of logical or physical content types or plurality of sub-channels for the content delivery channel at said processing element;
if said received metadata contains or refers to metadata for a subset of the plurality of logical or physical content types or plurality of sub-channels for the content delivery channel at said processing element,
extracting said metadata; and
applying said extracted metadata to any received content belonging to said subset of the plurality of logical or physical content types or a plurality of sub-channels for the content delivery channel at said processing element.

2. The method of claim 1, further comprising: caching said metadata at said processing element, overwriting previously cached value(s) of metadata for said subset of content types or sub-channels.

3. The method of claim 2, wherein the method further comprises:
if said checking finds the envelope does not contain metadata or reference to associated metadata for a subset of the plurality of logical or physical content types or plurality of sub-channels for the content delivery channel at said processing element,
retrieving metadata for each subset of received content associated with the plurality of logical or physical content types or plurality of sub-channels for the content delivery channel at said processing element from the cache on the processing element; and
applying said retrieved metadata to received content.

4. The method of claim 3, wherein said checking further checks whether the envelope comprises or refers to incremental metadata for said processing element, and if yes the method further comprises:
retrieving metadata for the content provider and content type from the cache;
modifying metadata retrieved from the cache with the received incremental metadata forming updated metadata; and
performing said applying step with said updated metadata; and
storing updated metadata replacing previously cached metadata

5. The method of any one of claims 1 to 4, wherein the processing element is a delivery server, a delivery client or a client application.

6. The method of any one of claims 1 to 5, wherein the envelope contains or refers to metadata for one or more processing elements of said content delivery architecture.

7. The method of any one of claims 1 to 5, wherein the envelope contains or refers to no metadata.

8. The method of any one of claims 1 to 7, wherein the content type is determined based on a multipurpose Internet mail extensions 'MIME' type of the content.

9. A processing element in a dynamic content delivery architecture supporting delivery channels, the channels supporting a plurality of logical or physical content types or sub-channels associated therewith, said processing element comprising:
a communication subsystem, said communication subsystem adapted to receive a content package from a content provider or a previous processing element in said dynamic content delivery architecture and further adapted to pass a modified content package to a subsequent processing element in said dynamic content delivery architecture;
a metadata extractor adapted to extract metadata directed to the processing element from the content package; and
a processor adapted to apply metadata based on content type or sub-channel to the content package once metadata for the processing element has been extracted.

10. The processing element of claim 9, further comprising
a cache adapted to store metadata extracted by the metadata extractor based on a content type;
wherein said content metadata extractor is further adapted to retrieve metadata from said cache based on the content type if no metadata for the processing element exists in the content package.

11. The processing element of claim 10, wherein said metadata extractor is further adapted to extract incremental metadata directed to the processing element.

12. The processing element of claim 11, wherein the metadata extractor is adapted to combine the extracted incremental metadata with metadata retrieved from the cache.

13. The processing element of any one of claims 9 to 12, wherein the processing element comprises a delivery server, a delivery client or a client application.

14. The processing element of any one of claims 9 to 13, wherein the content package contains or refers to metadata for one or more processing elements of said dynamic content delivery architecture.

15. The processing element of any one of claims 9 to 14, wherein the content package contains or refers to no metadata.

16. The processing element of any one of claims 9 to 15, wherein the processing element is arranged to determine the content type based on a multipurpose Internet mail extensions 'MIME' type of the content.

17. A computer readable medium containing computer executable instructions that, when performed by a processor of a computing device, cause said computing device to perform the steps of the method of any one of claims 1 to 8.

18. A method of updating channel metadata for a channel having a plurality of logical or physical content types or sub-channels at a processing element in a dynamic content delivery architecture, the method comprising:
receiving a channel metadata at the processing element;
checking the channel metadata to determine whether the channel metadata comprises channel metadata for a subset of the plurality of logical or physical channel types or sub-channels at said processing element; and
if said channel metadata contains channel metadata for said processing element, extracting and utilizing the metadata based on the subset of the plurality of logical or physical content types or sub-channels.

19. The method of claim 18, further comprising:
caching the metadata for the subset of the plurality of logical or physical channel types or sub-channels at said processing element

20. A computer readable medium containing computer executable instructions that, when performed by a processor of a computing device, cause said computing device to perform the steps of the method of claim 18 or claim 19.

21. A processing element in a dynamic content delivery architecture supporting delivery channels for updating channel metadata for a channel having a plurality of logical or physical content types or sub-channels at a processing element in a dynamic content delivery architecture, the processing element comprising:
means for receiving a channel metadata;
means for checking the channel metadata to determine whether the channel metadata comprises channel metadata for a subset of the plurality of logical or physical channel types or sub-channels at said processing element; and
means for extracting and utilizing the metadata based on the subset of the plurality of logical or physical content types or sub-channels if said channel metadata contains channel metadata for said processing element.

## Amended claims

### Amended claims in accordance with Rule 137(2) EPC.

**1.** A method of optimizing content delivery within a content delivery channel at a processing element in a dynamic content delivery architecture (100), the content delivery channel having a plurality of logical or physical content types or a plurality of sub-channels, the method comprising:
receiving an envelope at the processing element, the envelope containing content and/or metadata;
checking any received metadata to determine whether the received metadata comprises metadata for a subset of the plurality of logical or physical content types or plurality of sub-channels for the content delivery channel at said processing element;
if said received metadata contains or refers to metadata for a subset of the plurality of logical or physical content types or plurality of sub-channels for the content delivery channel at said processing element,
extracting said metadata; and
applying said extracted metadata to any received content belonging to said subset of the plurality of logical or physical content types or a plurality of sub-channels for the content delivery channel at said processing element.

**2.** The method of claim 1, further comprising: caching said metadata at said processing element, overwriting previously cached value(s) of metadata for said subset of content types or sub-channels.

**3.** The method of claim 2, wherein the method further comprises:
if said checking finds the envelope does not contain metadata or reference to associated metadata for a subset of the plurality of logical or physical content types or plurality of sub-channels for the content delivery channel at said processing element,
retrieving metadata for each subset of received content associated with the plurality of logical or physical content types or plurality of sub-channels for the content delivery channel at said processing element from the cache on the processing element; and
applying said retrieved metadata to received content .

**4.** The method of claim 3, wherein said checking further checks whether the envelope comprises or refers to incremental metadata for said processing element, and if yes the method further comprises:
retrieving metadata for the content provider (110) and content type from the cache;
modifying metadata retrieved from the cache with the received incremental metadata forming updated metadata; and
performing said applying step with said updated metadata; and
storing updated metadata replacing previously cached metadata

**5.** The method of any one of claims 1 to 4, wherein the processing element is a delivery server (122), a delivery client (140) or a client application (150).

**6.** The method of any one of claims 1 to 5, wherein the envelope contains or refers to metadata for one or more processing elements of said content delivery architecture (100).

**7.** The method of any one of claims 1 to 6, wherein the content type is determined based on a multipurpose Internet mail extensions 'MIME' type of the content.

**8.** A processing element in a dynamic content delivery architecture (100) supporting delivery channels, the channels supporting a plurality of logical or physical content types or sub-channels associated therewith, said processing element comprising:
a communication subsystem, said communication subsystem adapted to receive a content package from a content provider (110) or a previous processing element in said dynamic content delivery architecture (100) and further adapted to pass a modified content package to a subsequent processing element in said dynamic content delivery architecture (100);
a metadata extractor adapted to extract metadata directed to the processing element from the content package; and
a processor adapted to apply metadata based on content type or sub-channel to the content package once metadata for the processing element has been extracted.

**9.** The processing element of claim 8, further comprising
a cache adapted to store metadata extracted by the metadata extractor based on a content type;
wherein said content metadata extractor is further adapted to retrieve metadata from said cache based on the content type if no metadata for the processing element exists in the content package.

**10.** The processing element of claim 9, wherein said metadata extractor is further adapted to extract incremental metadata directed to the processing element.

**11.** The processing element of claim 10, wherein the metadata extractor is adapted to combine the extracted incremental metadata with metadata retrieved from the cache.

**12.** The processing element of any one of claims 9 to 11, wherein the processing element comprises a delivery server (122), a delivery client (140) or a client application (150).

**13.** The processing element of any one of claims 9 to 12, wherein the content package contains or refers to metadata for one or more processing elements of said dynamic content delivery architecture (100).

**14.** The processing element of any one of claims 9 to 13, wherein the processing element is arranged to determine the content type based on a multipurpose Internet mail extensions 'MIME' type of the content.

**15.** A computer readable medium containing computer executable instructions that, when performed by a processor of a computing device, cause said computing device to perform the steps of the method of any one of claims 1 to 7.
